Europäisches Patentamt

European Patent Office

Office européen des brevets

(11) Publication number: **0 348 528**
**A1**

# EUROPEAN PATENT APPLICATION

published in accordance with Art. 158(3) EPC

(21) Application number: **89900881.7**

(22) Date of filing: **23.12.88**

Data of the international application taken as a basis:

(86) International application number:
**PCT/JP 88/01298**

(87) International publication number:
**WO 89/06340 (13.07.89 89/15)**

(51) Int. Cl.⁴: **G 01 C 21/00, G 08 G 1/09**

(30) Priority: **28.12.87 JP 333053/87**
**28.12.87 JP 333055/87**
**10.08.88 JP 199093/88**

(43) Date of publication of application: **03.01.90**
**Bulletin 90/1**

(84) Designated Contracting States: **DE FR GB**

(71) Applicant: **AISIN AW CO., LTD., 10, Takane Fujii-cho, Anjo-shi Aichi 444-11 (JP)**
Applicant: **KABUSHIKI KAISHA SHINSANGYOKAIHATSU, 33-3, Hatagaya 1-chome, Shibuya-ku Tokyo 151 (JP)**

(72) Inventor: **NIMURA, Mitsuhiro, Aisin Aw Co., Ltd. 10, Takane, Fujii-cho, Anjo-shi Aichi 444-11 (JP)**
Inventor: **YOKOYAMA, Shoji, Aisin Aw Co., Ltd. 10, Takane, Fujii-cho, Anjo-shi Aichi 444-11 (JP)**
Inventor: **SUMIYA, Koji, Aisin Aw Co., Ltd. 10, Takane, Fujii-cho, Anjo-shi Aichi 444-11 (JP)**
Inventor: **MOROTO, Shuzo, Aisin Aw Co., Ltd. 10, Takane, Fujii-cho, Anjo-shi Aichi 444-11 (JP)**
Inventor: **KATO, Kiyohide, Aisin Aw Co., Ltd. 10, Takane, Fujii-cho, Anjo-shi Aichi 444-11 (JP)**

(74) Representative: **Vossius & Partner, Siebertstrasse 4 P.O. Box 86 07 67, D-8000 München 86 (DE)**

(54) **VEHICLE NAVIGATION SYSTEM.**

(57) This invention relates to a vehicle navigation system including an input device (1), a CPU (2), a display (3) and a storage device (4). The storage device (4) is a CD-ROM or the like for storing the network data and information of each point as the destination or the present position and map data (10), a crossing list (11), a destination list (12), road data (13), a place name list (14), etc., are stored therein. When the destination is inputted and designated by the input means (1), the CPU (2) interacts with a program stored in a ROM (9a) in order to set data for reaching the destination by means of the retrieval of a route corresponding to each point stored in the storage device (4) and stores it in memory such as a RAM (9b). In an embodiment, a non-volatile area for storing the starting point data (the east longitude, the north latitude, etc.) is disposed in the RAM (9b) and when data is inputted by a reset switch at the time of the inputting of the starting point, data in this non-volatile area can be rewritten. The data thus written is held until the reset switch is pressed again to input a location position and is not erased even when an ignition switch is turned off.

-1-

DESCRIPTION

**TITLE MODIFIED**
**see front page**

NAVIGATION APPARATUS

Technical Field

This invention relates to a navigation apparatus which, upon being provided with an input of a desired destination, furnishes course guidance by outputting guidance information for travel to the destination.

Background Art

A navigation apparatus provides course guidance for travel to a destination to a driver who is unfamiliar with the local geography. Recent years have seen extensive development of such navigation apparatus.

Conventionally, a vehicular navigation apparatus relies upon so-called "route matching" in which a course is set from a starting point to a desired destination before the vehicle begins travelling, with course guidance being provided to the driver in accordance with the course set. In some of these apparatus, a map is displayed on the screen of a CRT and the course is superimposed on the map when the driver designates a specific course. In a case where an intersection at which a turn is to be made next is designated in accordance with the preset course, the distance to this intersection is displayed numerically or in the form of a graph. When a turn is to be made at an intersection using such a navigation apparatus, the driver observes the course displayed on the map to decide the next intersection at which the turn is to be made, or the driver looks at the numeric or graphical display to ascertain the distance to the intersection where the turn is to be made, thereby determining the proper intersection.

In a case where the vehicle returns from the destination to the point of departure, generally the course from the departure point to the destination is set again before travelling. A system in which round-trip data are stored and serve as return data to eliminate an input of position at the time of return has been proposed in Japanese Patent Application Laid-Open Nos. 59-196413 and 60-37100.

However, in a system in which the round-trip data are stored and serve as data for the return trip, these data are obtained by setting a course from the departure point to the destination before travel. Consequently, the system cannot be applied to a case where a plurality of destinations are to be traversed.

Furthermore, in the conventional navigation apparatus, the code of an input intersection must be found in an intersection list and then entered from a keyboard or the like when a departure point is to be inputted. This requires time, labor and difficulty in use. In addition, since the departure point is not a precise intersection position, distance precision for pursuing the present position is poor.

The conventional navigation apparatus is such that

-3-

a course is set from a departure point to a destination before the vehicle begins travelling and course guidance is provided to the driver in accordance with the course set, as mentioned above. Consequently, a problem is that if the driver should happen to mistake, say, an intersection and stray from the set course, travel in accordance with the guidance provided by the navigation apparatus will not be able to continue unless the vehicle is returned to the set course. Furthermore, a decision as to whether or not a predetermined intersection has been passed as specified by the course guidance is premised upon detection of travelled distance or a left or right turn as detected by a distance sensor or steering angle sensor, respectively. In actuality, however, detection of travelled distance and steering angle is susceptible to considerable error, which can cause errors in judgment.

The input method is one in which a transparent control panel mounted on the front of a CRT is pressed by a finger tip to make an input, as set forth in Japanese Patent Application Laid-Open No. 62-51000. Conventionally, the transparent control panel, e.g., an infrared touch panel, includes light-receiving and light-emitting elements mounted in horizontal and vertical directions, respectively, on the screen of the display unit. When the screen is pressed by a finger tip, pairs of elements between which light has been interrupted can be detected in the horizontal and

-4-

vertical directions, whereby the position pressed by the finger tip is detected. However, if the conventional infrared touch panel described above displays a plurality of selectable item positions on its screen and such a position is designated by the operator's finger, the selected position cannot always be designated accurately. For example, there are instances where the detection area of a selectable item is not sufficiently large and finger thickness cannot be ignored, as when the screen is viewed from an angle or a plurality of selectable positions are arranged close together and a border portion between positions is designated, and there are also instances where, owing to use of a light-interruption method, a detection position cannot be specified at a point touched a distance away from a position touched first on the display screen, as when the operator's finger is moved on the screen.

The conventional navigation apparatus is such that a course is set from a departure point to a destination before the vehicle begins travelling and course guidance is provided to the driver in accordance with the course set, as mentioned above. Consequently, a problem is that if the driver should happen to mistake, say, an intersection and stray from the set course, travel in accordance with the guidance provided by the navigation apparatus will not be able to continue unless the vehicle is returned to the set course.

-5-

Furthermore, a decision as to whether or not a predetermined intersection has been passed as specified by the course guidance is premised upon detection of travelled distance or a left or right turn as detected by a distance sensor or steering angle sensor, respectively. In actuality, however, detection of travelled distance and steering angle is susceptible to considerable error, which can cause errors in judgment.

In order to solve the foregoing problems, the applicant has filed a patent application (Japanese Patent Application No. 62-275095)) proposing a novel navigation apparatus which relies upon an explorer system instead of the above-described route matching system. In accordance with this system, the coodinates of a plurality of geographical points (e.g., intersections, landmarks, etc.) are set and a desired destination is entered, whereupon a course is sought from each geographical point to the desired destination and outputted as guidance information. Navigation is possible even if distance, steering angle and geomagnetic sensors should happen to fail or even if these sensors are not provided. As a result, if the driver strays from a course or changes the desired destination, the apparatus readily provides the driver with guidance to the destination. However, a system through which desired destination, point of departure, present position and the like can be inputted in simple fashion is an important problem.

-6-

## Disclosure of the Invention

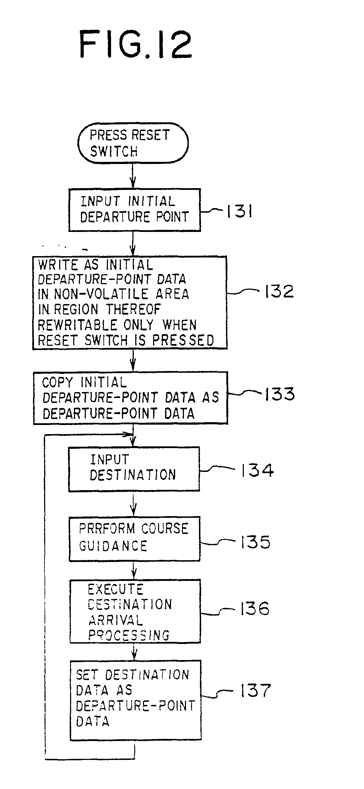

The present invention solves the foregoing problems. The present invention described in claims 1 through 3 in such that a reset switch is pressed when inputting a point of departure. As shown in Fig. 12, the following routine is executed whenever the reset switch is pressed: First, when an initial point of departure is entered by pressing the reset switch, the data are written in a non-volatile area of a RAM 9b, then destination input and course guidance are executed. When the destination is attained, destination arrival processing is executed and the destination data are set as departure-point data. When "RETURN" is selected at the time of a subsequent destination input, departure-point data are read in from the non-volatile area of the RAM 9b and these data are set as destination data. Accordingly, even if a plurality of destinations are traversed, the labor of entering a destination at the time of return can be eliminated. Further, if this arrangement is applied to a navigation system of the type in which course exploration for travel to a destination is provided at each geographical point and guidance information is outputted upon setting the coordinates of a plurality of geographical points (e.g., intersections and landmarks) and entering a destination, the labor involved in entering a destination at the time of return can be further curtailed.

-7-

The invention set forth in claim 4 is such that intersections adjacent to two intersections leading to, say, a previous guidance point or selected departure point, are retrieved. If the intersections are within a predetermined distance (e.g., 1 km) from the departure point and have intersection names, these are adopted as display intersections, a predetermined number (e.g., six) of the display intersections are displayed and it is possible to select these by a touch panel. Accordingly, the names of intersections within a predetermined range about the departure point are displayed on the display screen and a departure point can be selected from among them. As a result, the labor involved in making entry by code number as in the prior art can be eliminated, and entries can be made simply in one-touch fashion. In addition, even if a departure point is not an intersection, selection can be made by entering a code number. By adopting the departure point as an intersection, distance precision for pursuing the present position can be improved.

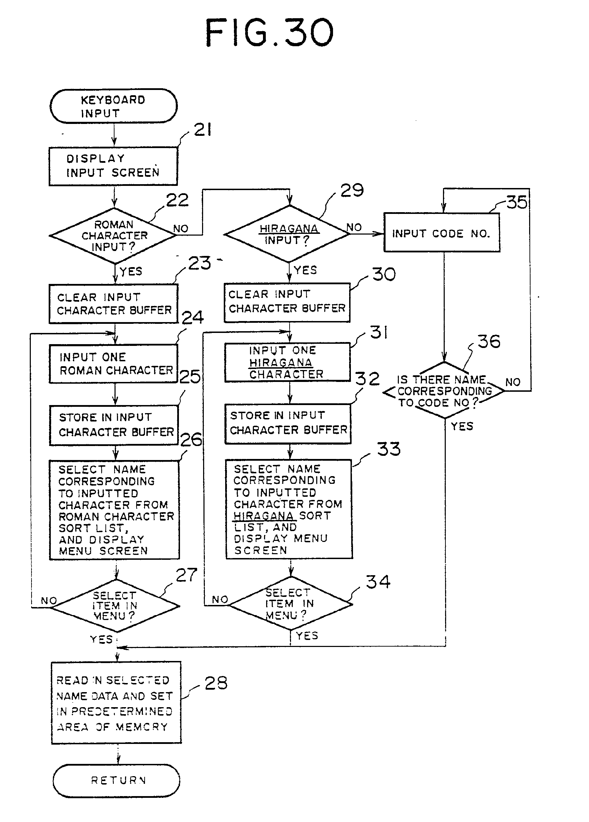

The object of the present invention as set forth in claims 5 through 7 is to provide a navigation apparatus in which, through a simple system arrangement, appropriate guidance information can be outputted at any geographical point without a course being fixed. For example, as shown in Fig. 30, if an input in Roman characters is made after an input screen is displayed, an input-character buffer is cleared, one Roman character is inputted and the character is stored in the input-character buffer. Next, names corresponding to the character string in the character buffer are selected from a Roman character sort list and displayed on a menu screen, and then an item in the menu is selected. If a selection can be made, the selected name data are read in and set in a predetermined area of a memory. Accordingly, when a destination is designated by destination designating means, guidance information for travel to a destination can be set at each and every geographical point by guidance information setting means. Thus, if the present location is entered as a guidance location by guidance location input means, guidance information for travel from this geographical point to the destination will be displayed on output means. As a result, after a destination is designated, guidance information can be obtained from any geographical point. In addition, after the present location is specified and entered, merely entering a trigger signal makes it possible to easily set the next geographical point as a guidance point in accordance with the guidance information for travel to the destination.

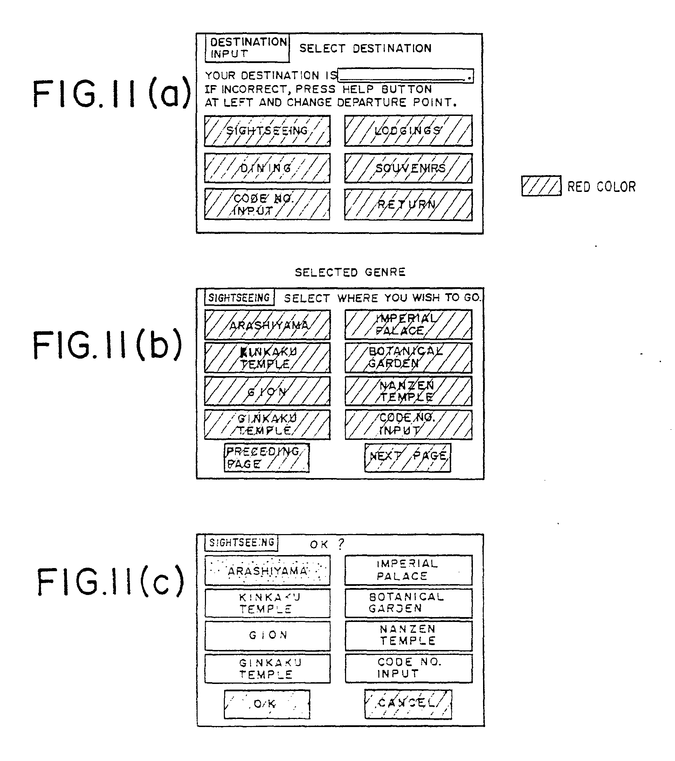

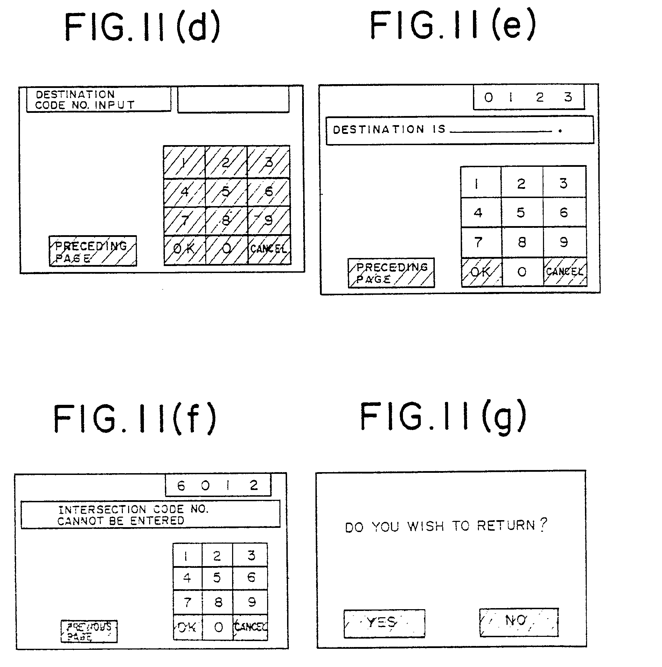

The object of the present invention as set forth in claim 8 is to make it possible to make a selective input on a touch panel in an accurate manner. For example, as shown in Fig. 11, "SIGHTSEEING", "LODGINGS", "DINING", SOUVENIRS", "CODE NO. INPUT", "RETURN" are displayed in red as selectable items, and a desired genre is selected by touch-panel input. The input display section is displayed entirely in the color red. Next, when a desired parking lot is inputted by the touch panel, a confirmation screen is displayed. Here the selected item is backlighted in, say, the color blue, while the other items appear in dark blue, so that the driver may easily confirm the selection made. Further, only confirmation keys "CANCEL" and "OK" are displayed in red. Accordingly, selective input on the touch panel can be performed in accurate fashion. By always causing the confirmation screen to be displayed before selecting a destination, it is possible to eliminate the danger of being guided to a different destination and destinations can be entered accurately.

Brief Description of the Drawings

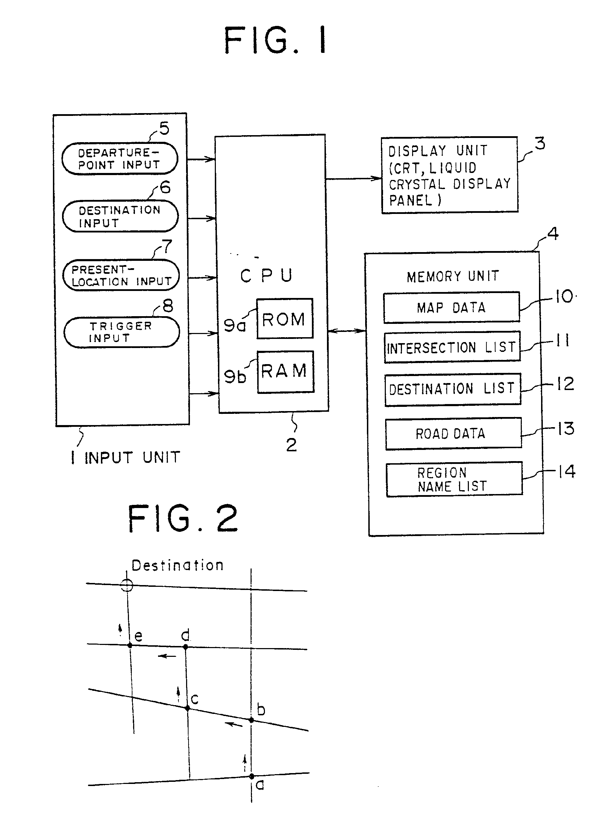

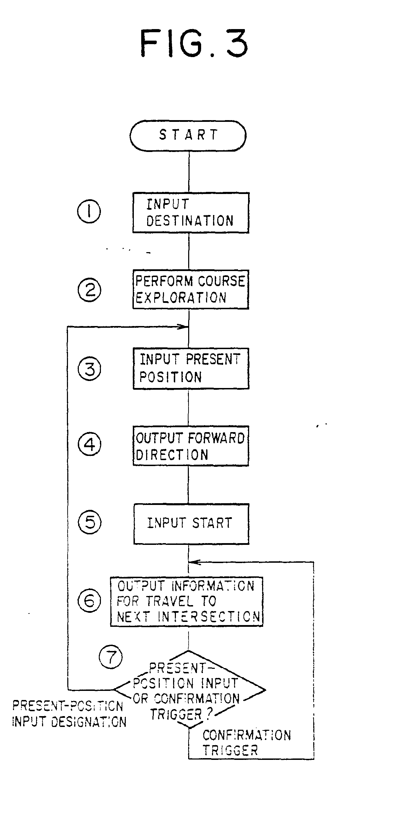

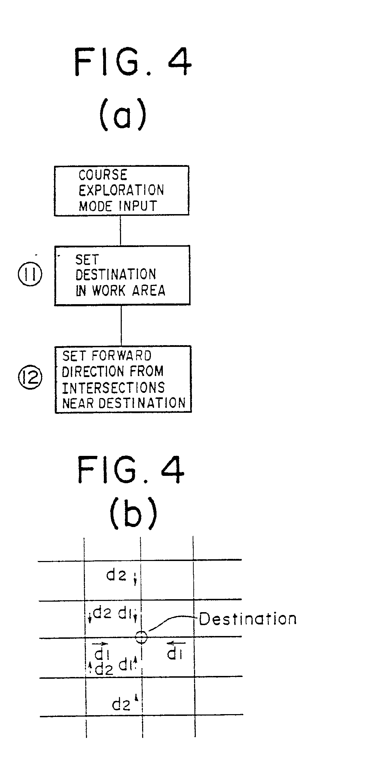

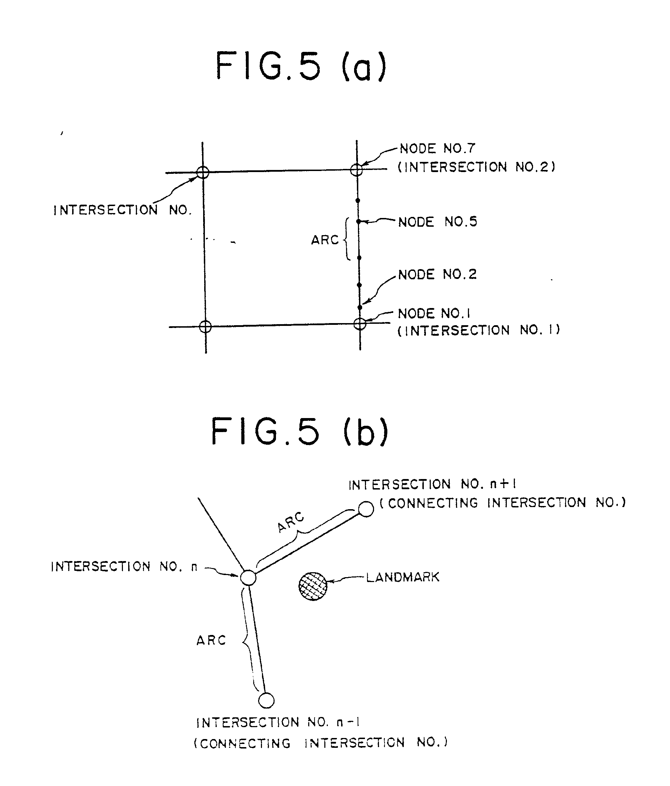

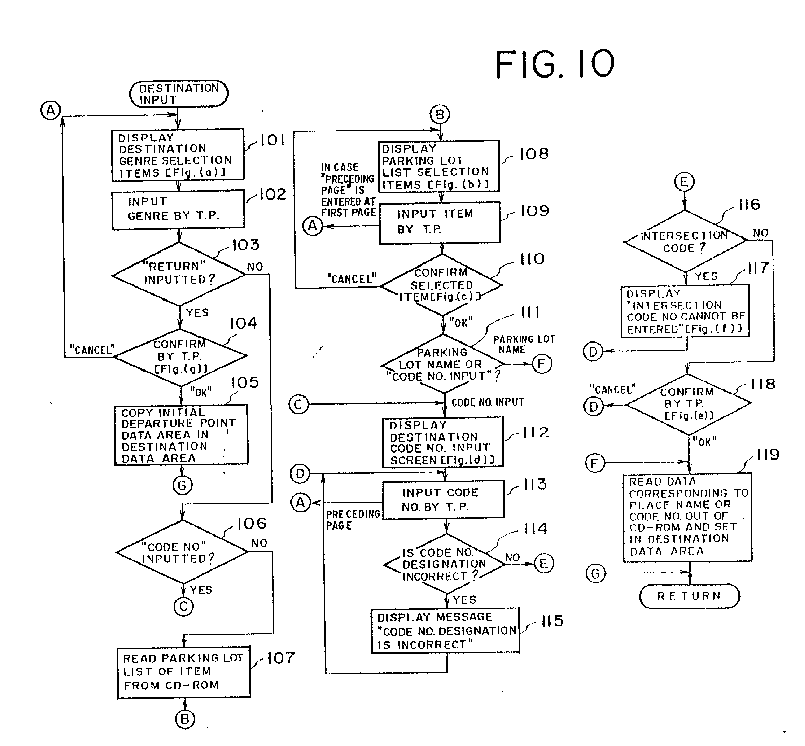

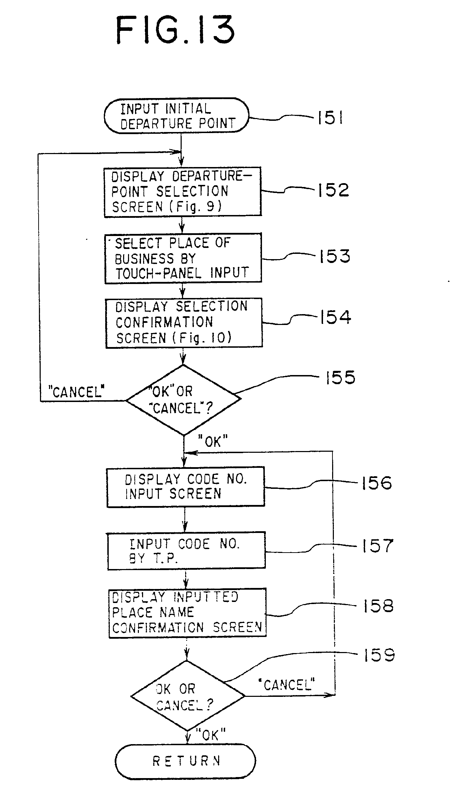

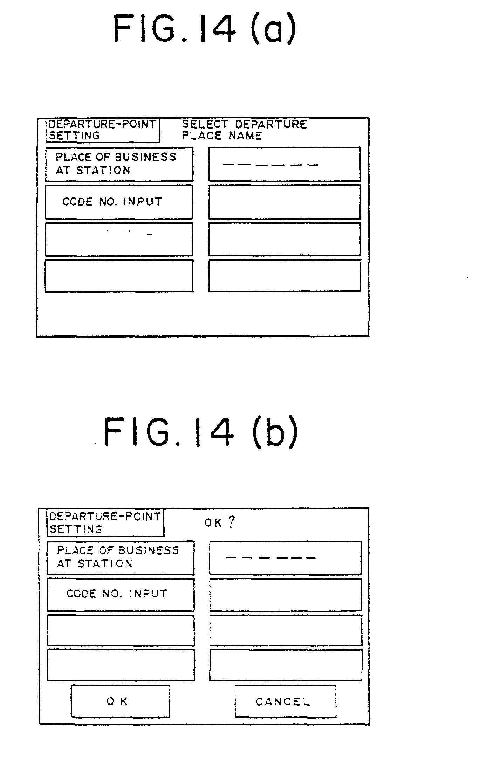

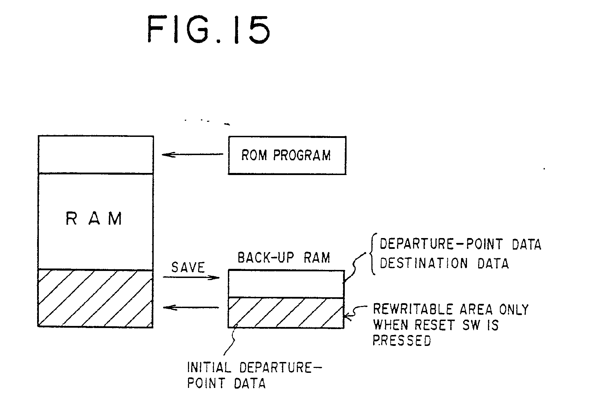

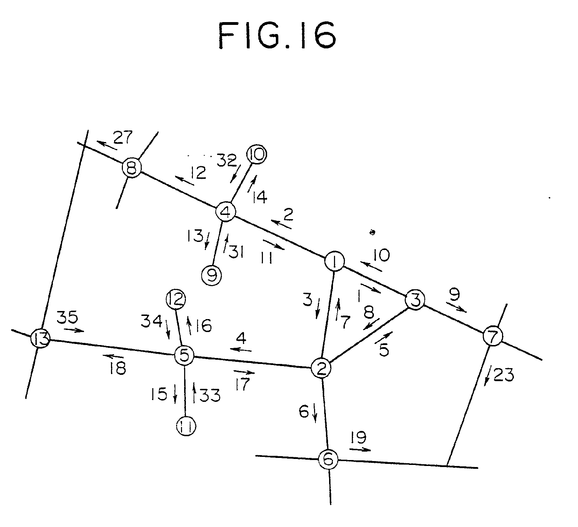

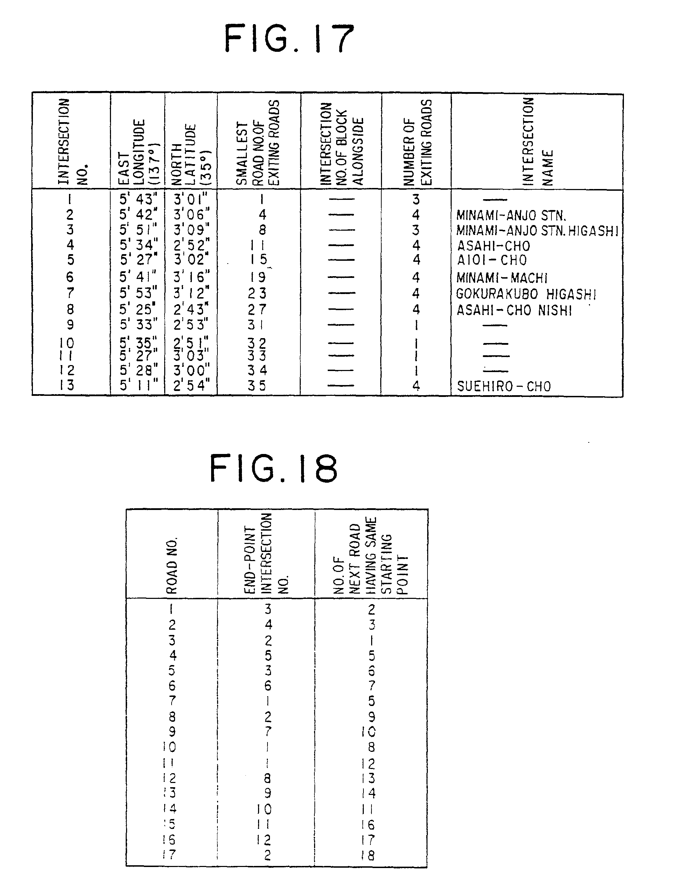

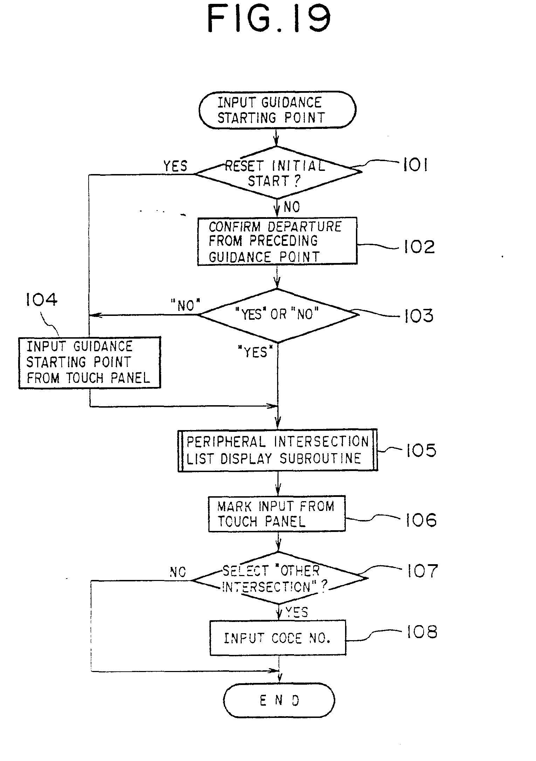

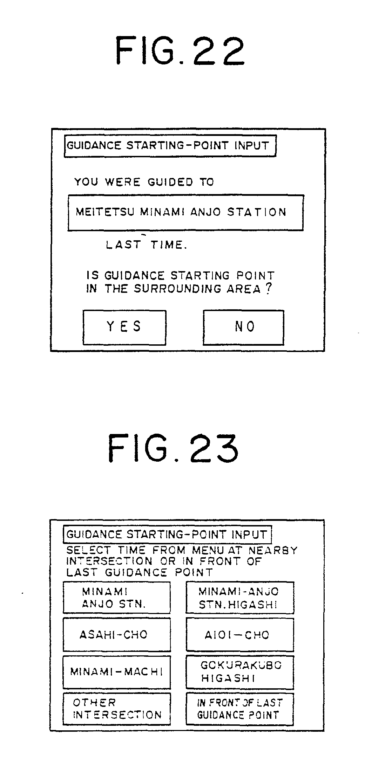

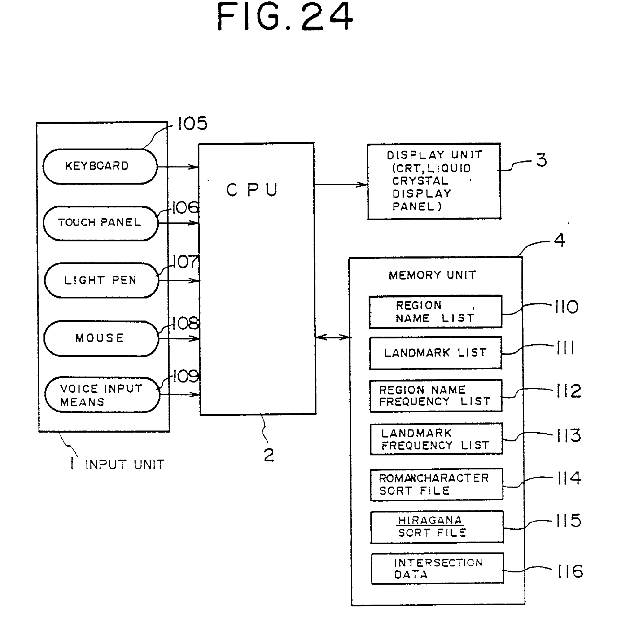

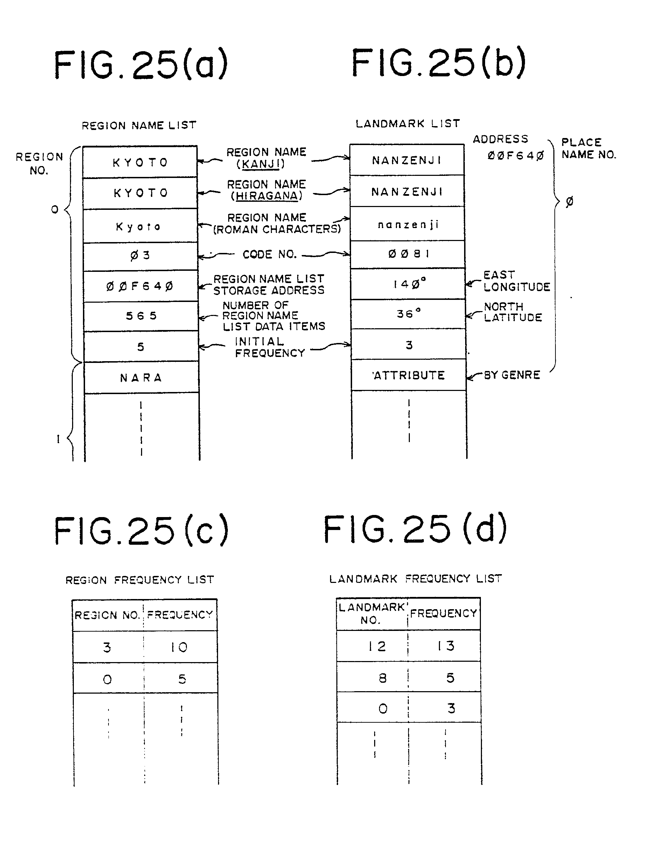

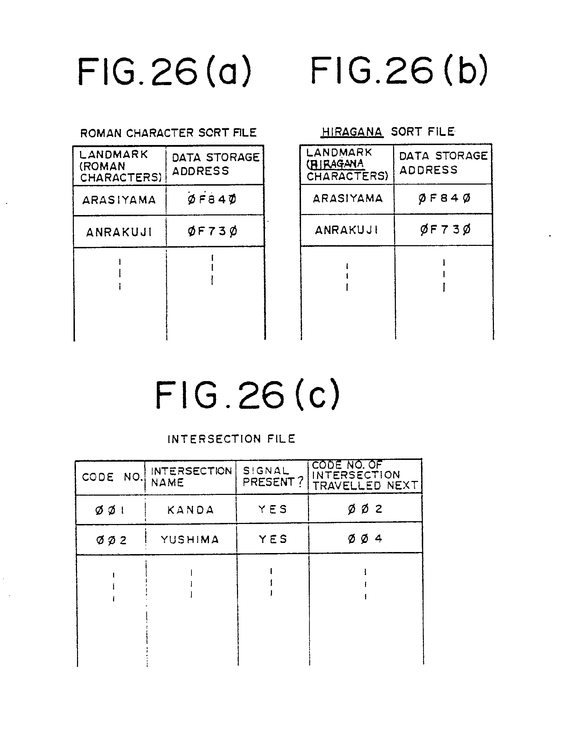

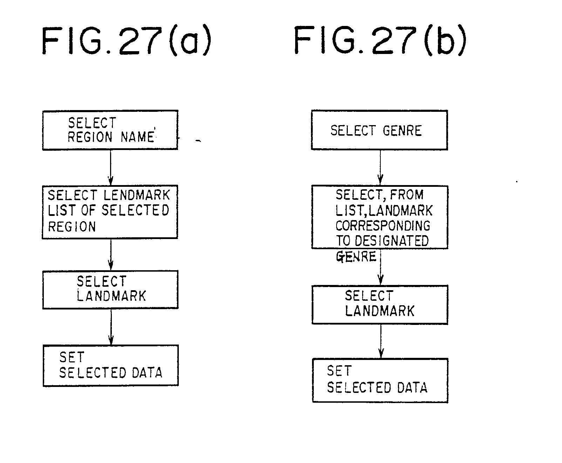

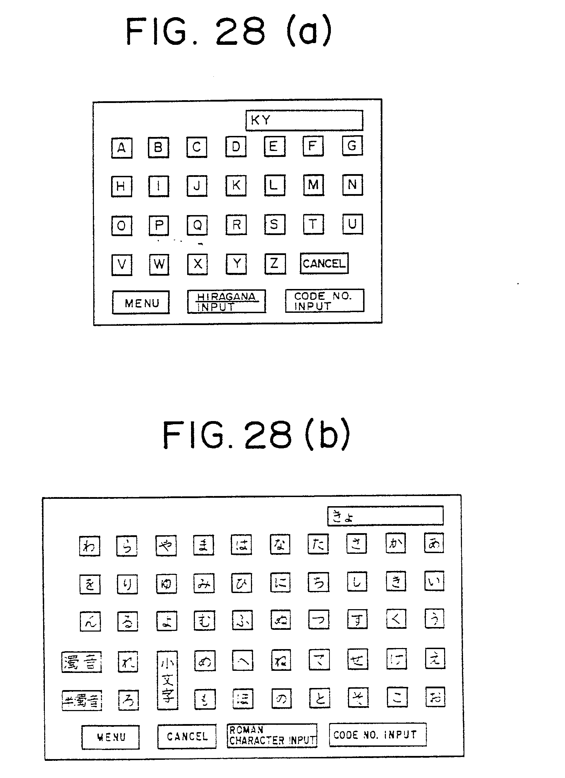

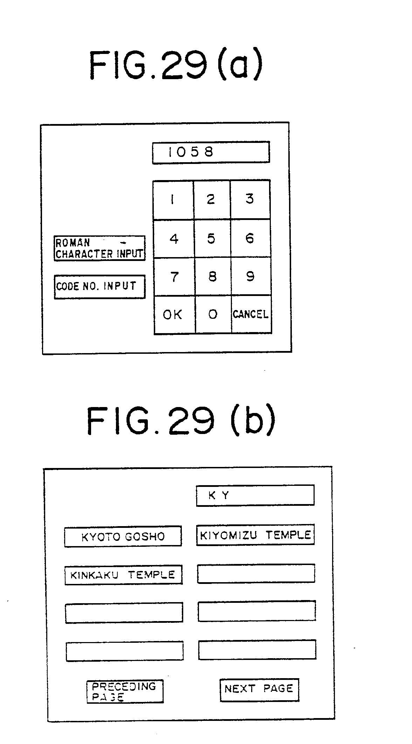

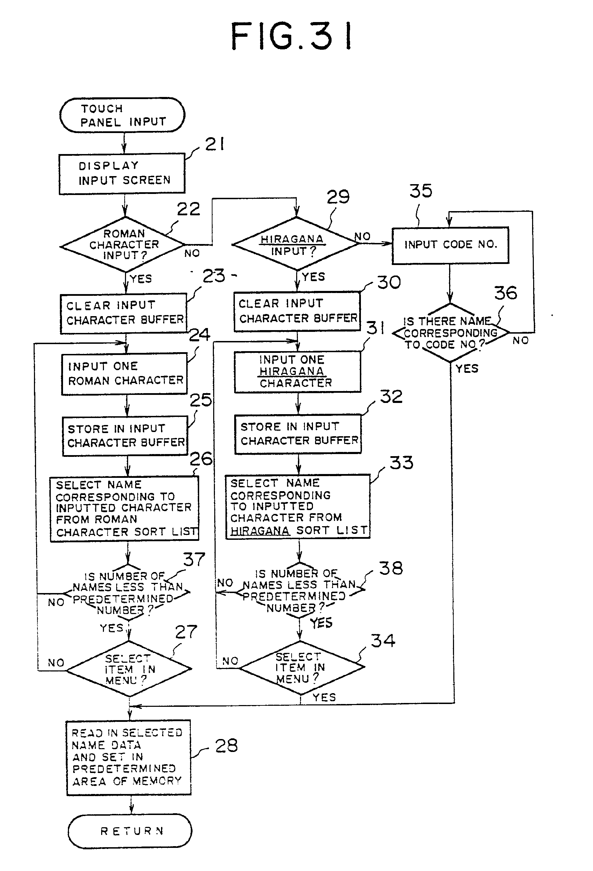

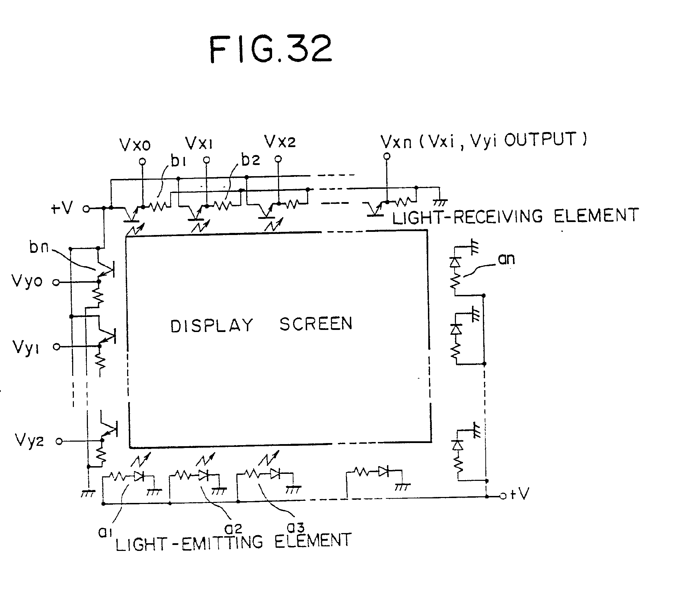

Fig. 1 is a view illustrating the construction of an embodiment of a navigation apparatus according to the present invention; Fig. 2 is a view illustrating one example of a route sequence; Fig. 3 is a view for describing the flow of navigation processing; Fig. 4 a view for describing course search processing; Figs. 5 through 9 are views for describing an example of the structure of data according to the invention; Fig. 10 is a flowchart showing an example of a destination input method; Fig. 11 is a view illustrating examples of screens in destination input; Fig. 12 and 13 are views for describing the flow of departure-point input processing; Fig. 14 is a view showing examples of screens in departure-point input; Fig. 15 is a view for describing the arrangement of storage areas; Fig. 16 is a view for describing a road network; Fig. 17 is a view for describing intersection data; Fig. 18 is a view for describing road number data; Figs. 19, 20, 21 are views showing the control flow of a departure-point input method; Figs. 22 and 23 are views illustrating examples of display screens in departure-point input; Fig. 24 is a view illustrating the construction of another embodiment of a navigation apparatus according to the present invention; Figs. 25 and 26 are views for describing another example of the structure of data according to the invention; Fig. 27 is a flowchart showing an example of a present-position input method; Figs. 28 and 29 are views illustrating examples of display screens for present-position input; Figs. 30 and 31 are views for describing the flow of processing of the present-position input method; and Fig. 32 is a view showing the structure of an infrared touch panel.

Best Mode for Carrying Out the Invention

An embodiment of the invention will now be described with reference to the drawings.

Shown in Fig. 1 are an input unit 1, a CPU 2, a display unit 3 such as a CRT or liquid crystal display panel, and a memory unit 4. The input unit 1 is provided with input means for departure-point input 5, destination input 6, present-position input and trigger input, these inputs being made by keyboard, touch panel, light pen, mouse or voice input. The memory unit 4 is a memory such as a CD-ROM in which network data indicative of geographical points, namely desired destination and present position, and other information are stored in advance. As will be described below, map data 10, a list 11 of intersections, a list 12 of destinations, road data 13 and a list 14 of region names are stored.

When a destination is designated by an input from the input means 1, the CPU 2 performs an exchange with a program, stored in a ROM 9b, in order to set information for travel to the destination, by a method such as course exploration, in accordance with each geographical point stored in the memory unit 4. The CPU stores this information in a memory such as a RAM 9b.

In the present embodiment, the RAM 9b is provided with a non-volatile area for storing departure-point data (east longitude, north latitude, etc.). When an input is made by a reset switch in entering a departure point, the data in this non-volatile area can be rewritten. Data written in are preserved until the reset switch is pressed again and a geographical point is entered. Data will not be erased even if an ignition switch is turned off.

When present-position information is entered by

-12-

the input means 1, the display unit 3 outputs guidance information for this point. If only intersections serve as geographical points, the outputted guidance information is that for travel to the next intersection, such as an indication of a left or write turn, at the intersection serving as the guidance point. In a case where there is a second intersection encountered immediately after turning at the aforementioned next intersection, it is of course possible for the outputted guidance information to include the direction of the first turn along with information designating the proper lane to take after the turn, as well as the direction of the second turn and the associated guidance information. For example, the display unit can output guidance information relating to a course leading to a desired destination in accordance with the path sequence a, b, c, ... shown in Fig. 2.

The flow of processing associated with the present embodiment will now be described with reference to Fig. 3.

When the driver enters the code of a desired destination [step ①], a course search mode is established in which information for travel to the desired destination is set for all geographical points with the exception of the entered desired destination [step ②]. When course search ends, a present position input mode is established, in which the driver inputs the code of his present position [step ③].

When this is done, the direction of forward travel from this position is outputted [step ④]. Next, when the driver inputs an intersection verification trigger [a start input, step ⑤], information for attaining the destination at the next intersection is outputted (step ⑥]. Next, monitoring is performed [step ⑦] to see whether the intersection verification trigger or a signal from a present-position input button has been entered. If the intersection verification trigger has been entered, the program returns to the processing of step ⑥. If the signal from the present-position input button has been entered, the program returns to the processing of step ③. In other words, in accordance with this system, a trigger is inputted each time an intersection is verified providing that the vehicle is travelling as per instructions. If the vehicle strays from the instructed course and the driver notices this only after the vehicle has travelled to another intersection, the present-position input button is pressed. Accordingly, whenever a trigger is inputted, guidance information relating to an intersection on a route leading to the desired destination is outputted in sequential fashion. When the present-position input button is pressed, the present position input mode is established.

The course search processing of step ② will now be described. When the course exploration input mode

-14-

is established, as shown in Fig. 4(a), first the desired destination is set in a work area [step ⑪], after which forward directions from intersections near the destination are set [step ⑫]. As shown in Fig. 4(b), the set forward directions include forward directions $d_1$ at intersections before the destination, and forward directions $d_2$ at intersections before the first-mentioned intersections. It is permissible to execute this course search after the processing of step ③ in Fig. 3, in which case course search would be performed whenever present position is inputted. Furthermore, since guidance information is outputted in response to the trigger input in accordance with the route set as a result of course search, the pertinent intersections are limited in number. Accordingly, it will suffice to provide guidance information solely for the minimum number of intersections.

The abovementioned destination or present-position input method will now be described with reference to Figs. 5 through 11.

Figs. 5 through 9 illustrate the structure of data in accordance with the invention.

Fig. 5 is a diagram useful in describing the fundamental approach adopted in forming map data. As shown in Fig. (a), a map is not construed merely as intersections but also includes nodes, which are points having useful guidance information (e.g., bridges, rivers, buildings, gasoline stations, etc.) at geographical points between intersections. Thus, nodes indicate point data representing map coordinates, and some of the nodes are intersections. Arcs indicate line data and represent portions of the roads. By adopting such an arrangement, a landmark serving as useful guidance information can be provided as data between roads (i.e., between two arcs) connecting node numbers on either side of a node number n of an intersection depicted in Fig. 5(b).

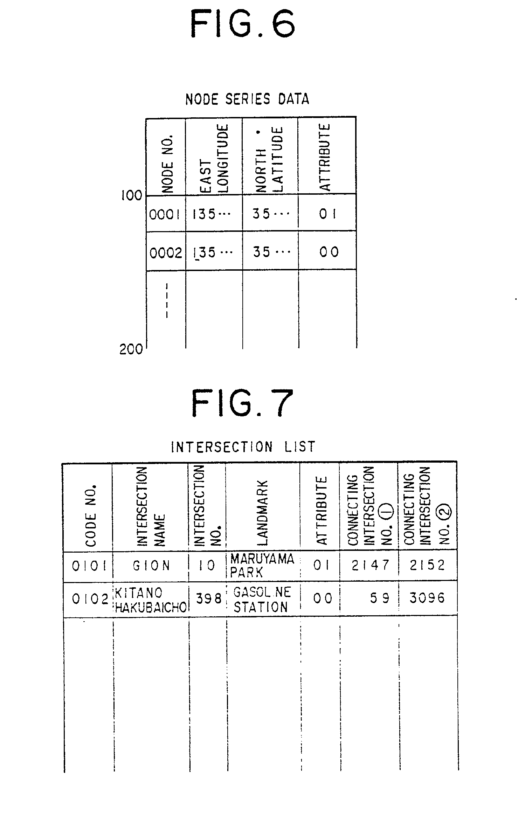

Fig. 6 illustrates node series data. What is stored are east longitude and north latitude, namely the coordinates of the pertinent geographical point, for each node number, as well as the attribute which distinguishes the effective guidance information (e.g., bridges, rivers, buildings, gasoline stations) as data for each node number.

Fig. 7 illustrates an example of an intersection list, in which there are stored the node numbers of the intersections, the intersection names, the intersection numbers (numbers assigned only to those of the nodes that are intersections), the node numbers of two connecting nodes, as described above with reference to Fig. 5(b), the names of landmarks and attributes.

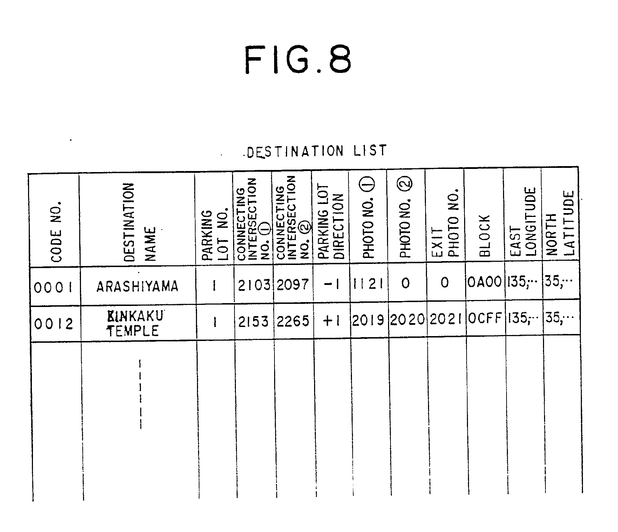

Fig. 8 illustrates an example of a destination list, in which there are stored code numbers, the names of destinations, parking lot numbers, the numbers of two connecting intersections connecting a desired destination, the directions of parking lots (whether a

-16-

parking lot is on the left or right side of a road or straight ahead), the numbers of photographs of connecting intersections, the numbers of photographs of parking lot exits, block data for each region, and coordinates (east longitude, west latitude). The arrangement is such that the attribute of each desired destination is distinguishable by genre. For example, the following numbers can be assigned to the most significant bit of code number to indicate genre: 0 (sightseeing), 1 (public facility), 2 (lodgings), 3 (dining), 4 (place of business), 5 (gasoline station), 6 (intersection), 7 (parking lot), 8 (souvenirs), and other attribute data can be provided if desired. These desired destination data indicate parking areas near the desired destinations. If a desired destination is a parking lot, the driver is informed of the connecting intersection numbers, the direction of the parking lot (whether it is on the left or right side of a road or straight ahead), the photograph numbers of the connecting intersections and the photograph numbers of the parking lot exit. Thus, the driver is guided in positive fashion until the vehicle arrives at its final destination.

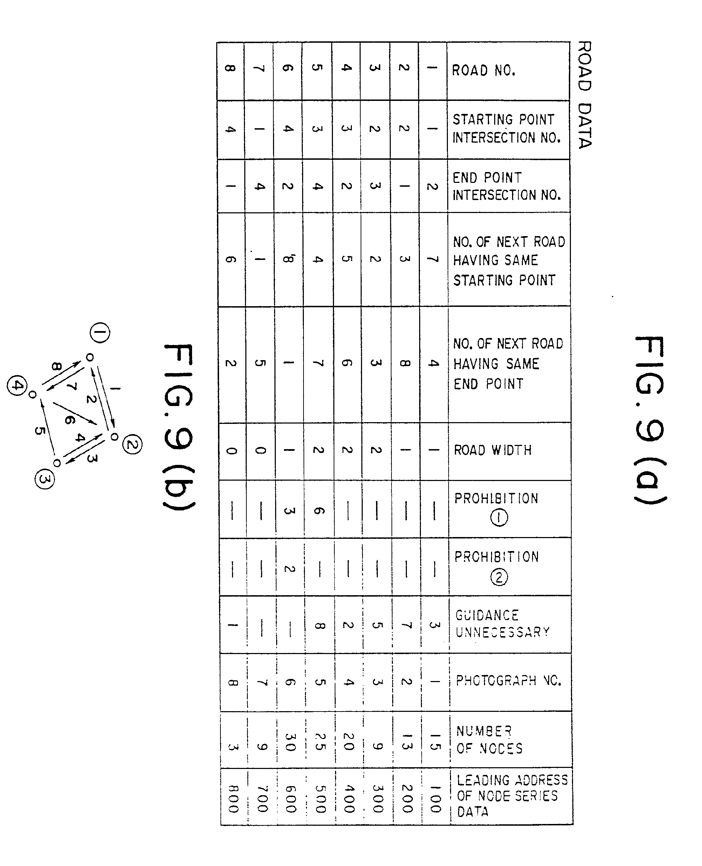

Fig. 9(a) illustrates an example of road data. As shown in Fig. (b), each road is assigned a road number(s) along with the direction(s) of traffic flow. The stored road data include, for each road number, the node numbers of starting and end points of the road,

the number of a road having the same starting point, the number of a road having the same end point, road width, information relating to prohibitions, information relating to guidance not required (as when the driver need only continue travelling straight ahead), photograph numbers, the numbers of nodes, the leading addresses of node series data, etc.

Destination input will now be described with reference to Figs. 10 and 11.

Fig. 10 is a flowchart of the associated processing. A step 101 calls for the screen shown in Fig. 11(a) to be displayed as a desired destination input. This screen is for indicating the genre of the destination. Items which appear frequently, such as "SIGHTSEEING", "LODGINGS", "DINING", SOUVENIRS", "CODE NO. INPUT", "RETURN" are displayed in red as selectable items, and a genre is selected by touch-panel input at step 102. Next, it is determined at step 103 whether "RETURN" on the screen of Fig. 11(a) has been inputted. If the answer is NO, it is determined at step 106 whether "CODE NO." has been inputted. If the answer received here is YES, then the program proceeds to step 112.

If a NO answer is received at step 106, the program proceeds to step 107, at which a list of parking lots (destinations) for the selected item are read in from the CD-ROM, whereupon the screen shown in Fig. 11(b) is displayed (step 108). At the same time,

-18-

a voice track "SELECT YOUR DESIRED DESTINATION" is played. Here also items are displayed in the order of their frequency. By touching a "PRECEDING PAGE" or "NEXT PAGE" key, destination parking lots can be selectively designated. All of the input display sections are displayed in the color red. The last item in the display is the "CODE INPUT NO. INPUT" item. If "PRECEDING PAGE" is entered at the first page, the program returns to step 101.

When a desired parking lot is inputted by the touch panel (step 109), a confirmation screen shown in Fig. 11(c) is displayed at step 110. Here the selected item is backlighted in, say, the color blue, while the other items appear in dark blue, so that the driver may easily confirm the selection made. If "CANCEL" is pressed, the program returns to step 108. If OK is pressed, it is determined at step 111 whether the name of a parking lot has been inputted or a code number. If the name of a parking lot is the desired destination, the program proceeds to step 119, where data corresponding to the name of the parking lot are read from the CD-ROM and set in the memory area of the CPU.

When a change is made in the code number input at step 111, or when code number input is selected at step 106, a code number input screen shown in Fig. 11(d) is displayed at step 112, after which a desired parking lot code number is inputted from the touch panel at

-19-

step 113. It is then determined at a step 114 whether the code number designation is mistaken. If it is, step 115 calls for display of a message reading "CODE NO. DESIGNATION IS INCORRECT" and the program returns to step 113. If the code number designation is correct, then it is determined at step 116 whether the code number is an intersection code. If it is not an intersection code, the program proceeds to step 118, at which the desired destination is displayed automatically, as shown in Fig. 11(e). If the "OK" key is pressed, the program proceeds to step 119, at which data corresponding to parking lot name are read out of the CD-ROM and set in the memory area of the CPU. The program returns to step 113 if "CANCEL" is pressed.

If the code number designated at step 116 is indicative of an intersection, a message reading "INTERSECTION CODE NO. CANNOT BE ENTERED", which is shown in Fig. 11(f), is displayed at step 117 and the program returns to step 113. When "RETURN" is inputted at step 101 in execution of the above routine, the screen of Fig. 11(g) is displayed through steps 103, 104. If the driver presses "OK", the initial departure-point data are copied in the desired destination storage area (step 105).

Reference will now be made to Fig. 12 to describe flow when the reset switch characterizing the present invention is pressed. The a reset switch is pressed when inputting a point of departure. The following

-20-

routine is executed whenever the reset switch is pressed: First, when an initial point of departure is entered in a case where the reset switch is pressed, the data are written in a non-volatile area of the RAM 9b in a region thereof rewritable as initial departure-point data only when the reset switch is pressed, and these data are written in also as departure-point data (steps 131 - 133). Next, destination input and course guidance are executed (steps 134, 135). When the destination is attained, destination arrival processing is executed (steps 103, 105 in Fig. 10) and the destination data are set as departure-point data. When "RETURN" is selected at the time of a subsequent destination input, the data in the RAM 9b are read in and these data are set as destination data (steps 103 - 105 in Fig. 10).

Fig. 13 illustrates the flow of processing for the initial departure-point input of Fig. 152. The departure-point selection screen shown in Fig. 14 is displayed at step 152. When a place of business (imagine that this is a car rental business) is selected by an input from the touch panel (step 153), a selection confirmation screen display is outputted at step 154, as shown in Fig. 14(b). If "OK" is entered at step 155, the code-number input screen is displayed, just as in Figs. 11(d) and (e), a code number is entered by the touch panel and a screen for confirming the name of the entered location is displayed (steps 156 - 158).

In the foregoing embodiment it is of course possible to enter the present location as the initial departure point, and it is also possible to alter a destination at any time.

Input of departure point in the present invention will now be described in conjuction with Figs. 16 through 23.

Figs. 16 through 18 illustrate another example of the structure of data, in which Fig. 16 illustrates network data having numbers assigned to roads and intersections. As shown in Fig. 17, the intersection data include, in correspondence with each intersection, positional coordinates (east longitude, north latitude), the smallest road number of the roads exiting the intersection, the intersection number of a block alongside, the number of roads exiting and the intersection name. In the present embodiment, the network data are divided into a number of blocks. Therefore, if an intersection crossing into an adjacent block exists and the vehicle makes a transition to the adjacent block, the abovementioned intersection number of the block along side will be necessary.

Fig. 18 illustrates road number data. Stored in correspondence with each road number are the number of the intersection which is the end point and the next road number having the same starting point. It should be noted that the intersection list 12 shown in Fig. 1

stores a correlation table of intersection numbers, code numbers and intersection names, and the destination list 13 stores code numbers, destination names, parking lot numbers, the numbers of two intersections connected to a destination (the destination being set between two intersections), positional coordinates and the like.

A method of entering point of departure in the navigation apparatus of the invention will now be described in accordance with Figs. 19 through 21.

Fig. 19 illustrates the main flow. First, at step 101, it is determined whether an initial start is made after reset. In case of initial start, guidance starting point based on code number is entered by the touch panel or the like at step 104. If this is not initial start after reset, the screen shown in Fig. 22 is displayed and it is verified by the touch panel whether the present location is near the previous location (destination) at step 102. If "NO" is touched on the screen of Fig. 22 at step 103, the program proceeds to step 104. If "YES" is touched, the processing of a routine for displaying a peripheral intersection list is executed at step 105, and a screen of intersections with assigned names shown in Fig. 23 is displayed. Next, at step 106, a touch-panel input is made on the screen of Fig. 23. At step 107, it is determined whether "OTHER INTERSECTION" has been selected. If it has not been selected, processing ends; if it has, the departure point is entered by code number.

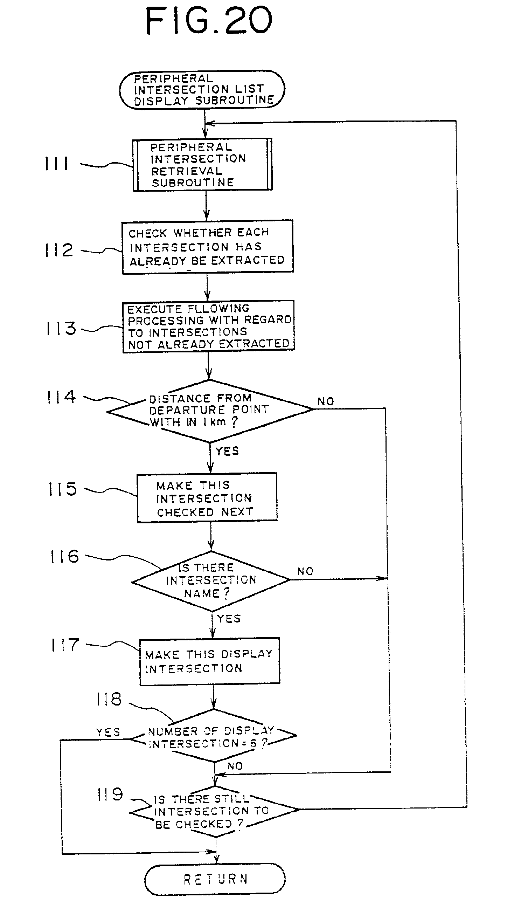

Fig. 20 illustrates the processing of the routine of step 105 for displaying the peripheral intersection list.

First, a peripheral intersection retrieval subroutine is executed at step 111. As will be described below, this is processing for retrieving intersections adjacent to two intersections $K_1$, $K_2$ leading to the preceding guidance point or a selected point of departure. Next, at steps 112, 113, it is checked to determine whether each of the retrieved intersections has already been extracted. The following processing is executed with regard to an intersection that has not already been extracted. Specifically, it is determined at step 114 whether the intersection is within a predetermined distance (e.g., 1 km) of the point of departure. If the answer is "NO", the program jumps to step 119. If the intersection is within the predetermined distance, this is adopted as an intersection $K_3$ to be investigated next. Then, at step 116, it is determined whether the intersection $K_3$ has an intersection name. If it does not have an intersection name, the program jumps to step 119; if it does, this intersection is made a display intersection $C_i$ and, at step 118, it is determined whether the number of display intersections is a predetermined number (e.g., six). If the number of intersections is not a predetermined number, it is determined at step 119 whether there is still an intersection to be checked. If there is, then the foregoing processing is repeated. The program returns when the number of display intersections reaches the predetermined number or when there are no longer intersections to be checked.

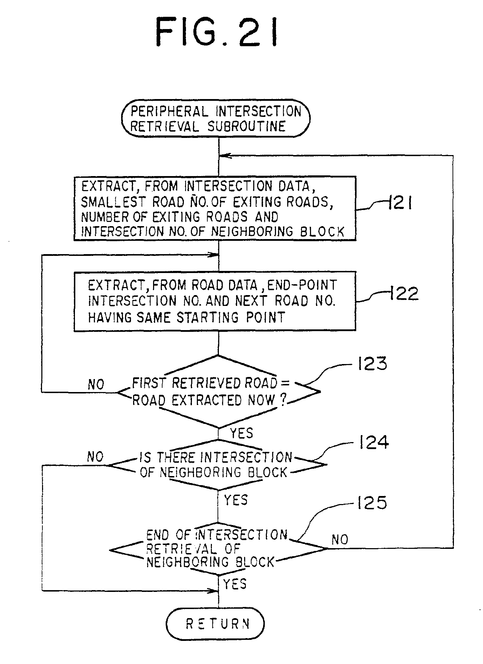

Fig. 21 illustrates the processing of the subroutine of step 111 for retrieving peripheral intersections.

For example, of the two intersections $K_1$, $K_2$ leading to the preceding guidance point or selected point of departure, assume that $K_1$ has the intersection numbers 1,2 indicated by the intersection data of Fig. 17. In such case, the smallest road number 1 of the roads exiting the No. 1 intersection and the number of roads 2 exiting the intersection are obtained at step 121. Next, at step 122, there are obtained from the road data of Fig. 18 the end point intersection number 3 of the abovementioned road number 1 and the next road number 2 having the same starting point, whereby there is obtained the end point intersection 2. It is then determined at step 123 whether the initially retrieved road and the road retrieved now are the same, namely whether all roads in a block exiting the intersection have been retrieved. If, when all roads have been retrieved, there is an intersection in an adjacent block, this intersection is retrieved and the foregoing processing is repeated, whereby intersections connected to intersection $K_1$ are retrieved (steps 124, 125).

Another embodiment of the invention will now be described in accordance with Figs. 24 through 31.

In Fig. 24, there are shown input means 1, a CPU 2, a display unit 3 such as a CRT or liquid crystal display panel, and a memory unit 4. A keyboard 105 comprises a ten-key pad and function keys for inputting code numbers of predetermined geographical locations, such as a desired destination and present position (guidance point). A touch panel 106, light pen 107, mouse 108 or voice input means 109 are employed instead of the keyboard 105. The memory unit 4 is a memory such as a ROM in which network data indicative of geographical points, namely desired destination and present position, and other information are stored in advance. As will be described below, a region name list 110, a landmark list 111, a region name frequency list 112, a landmark frequency list 113, a romaji (Roman character) sort file 114, a hiragana (the cursive Japanese syllabary) sort file 115 and intersection data 116 are stored.

Figs. 25 and 26 illustrate the structure of data in this embodiment. Fig. 25(a) illustrates a list of region names collected over a comparatively wide area. For example, a region number 0 represents "KYOTO". As data, the list contains region names in kanji (Chinese characters), hiragana and Roman characters, code numbers, the storage addresses of a region name (landmark) list, the numbers of items of data in a region name (landmark) list, and initial frequency. Fig. 25(b) illustrates a landmark list of landmarks constituting lower-order information under region names, e.g., place names, intersection names and the names of rivers, bridges and buildings. As data, the list contains names in _kanji_, _hiragana_ and Roman characters, code numbers, east longitude and north latitude, initial frequency and attributes (genre information indicative of sightseeing, lodgings, dining, etc.). It can be arranged so that the region name list and landmark list are handled as intersection lists, and so that these can be made into lists of intersection names and landmarks between intersections.

Figs. 25(c), (d) illustrate lists showing the frequency at which regions and landmarks are used. These are for being extracted with higher priority in a case where frequency of use is retrieved as data.

Figs. 26(a), (b) show Roman character and _hiragana_ sort files, respectively. Place names are arranged in alphabetical order or in the order of the Japanese syllabary, and data storage addresses are provided corresponding thereto, thereby shortening the time needed to retrieve the place names. Fig. 26(c) illustrates an example of intersection data. Stored as data in correspondence with the intersection code numbers are intersection names, whether or not traffic

-27-

signals are present, and the code numbers of intersections to be traversed next. Thus, a variety of navigational information is displayed on a display screen.

Fig. 27 illustrates an example of a method of inputting present location, in which (a) entails selecting a place name list of a region selected by designating a region name, and then selecting a particular place name and setting the related data, and (b) entails selecting, from a list, a place name corresponding to a genre selected by designating a genre such as sightseeing, lodgings or dining, and then selecting a particular place name and setting the related data. In a case where the names of candidates are few, it is possible to perform direct name selection.

Figs. 28(a), (b) and Fig. 29(a) illustrate display screens when input is made on the display by a touch panel, light pen, mouse or the like. Fig. 28(a) shows a Roman character input screen, (b) a _hiragana_ input screen, and Fig. 29(a) a code number input screen.

Fig. 29(b) depicts an example of a menu screen when a destination input is made. This illustrates a case in which "KY" is entered for retrieval and display of "KYOTO GOSHO, KIYOMIZU TEMPLE, KINKAKU TEMPLE".

The flow of processing for present location input will now be described with reference to Figs. 30 and 31.

-28-

Fig. 30 shows the flow of processing for name selection by keyboard. First, the input screen is displayed at step 21, after which it is determined at step 22 whether a Roman character input is made. In case of a Roman character input, an input character buffer is cleared, one Roman character is entered and this is stored in the input character buffer (steps 23 - 25). Next, names corresponding to the character string in the character buffer are selected from the Roman character sort list and displayed on the menu screen (step 26), and then an item in the menu is selected (step 27). If a selection can be made, name data selected at step 28 is read in and set in a predetermined area of a memory. If an item selected is not on the menu screen, the program returns to step 24 and the foregoing processing is repeated. If the input is not a Roman character input at step 22, it is determined at step 29 whether the input is a hiragana input. If it is a hiragana input, processing (steps 30 - 34), which is similar to the foregoing processing, is executed. If the input is not a hiragana input at step 29, a code number is entered (step 35). Then, if a name corresponds to the code number at step 36, the program proceeds to step 28.

Fig. 31 shows the flow of processing for name selection by keyboard. Though the processing is basically similar to that of Fig. 30, here the processing is such that the number of place names

-29-

corresponding to the character string is made less than a predetermined number.

The present invention is not limited to the foregoing embodiment but can be modified in various ways. For example, an arrangement can be adopted in which a place name list of specific regions is stored on an IC card or CDROM.

Fig. 32 shows the structure of an infrared touch panel as an example of the touch panel 106. Light-emitting elements $a_1$, $a_2$, $a_3$,... $a_n$ are arrayed horizontally and vertically on a display screen, and light-receiving elements $b_1$, $b_2$, $b_3$, ... $b_n$ are arrayed horizontally and vertically on the display screen so as to oppose respective ones the light-emitting elements. When the display screen is touched by a finger tip, the touched position is detected by pairs of the horizontal and vertical elements. This makes detection of position possible.

The present invention is not limited to the foregoing embodiments but can be modified in various ways.

For example, in the foregoing embodiments, destinations and intersections are entered as code numbers. However, an arrangement can be adopted in which hiragana or Roman character data are provided as the destination and intersection data and these are entered by character retrieval.

Further, it is permissible to adopt an arrangement

-30-

in which the conventional set-up provided with a distance sensor or steering sensor is combined with the navigation apparatus of the present invention. The resulting system can be adapted in such a manner that, rather than the next geographical point being identified only when a switch is operated by the driver, the navigation apparatus identifies predetermined geographical points automatically by other means and changes over the guidance information delivered to the driver each time.

With a combination of the present invention and the conventional system, it can be so arranged that a region having a simple road network, such as only a single road, is handled by the conventional system having the sensors, while a region having a complicated road network is dealt with by the system of the present invention. It can also be so arranged that the navigation apparatus of the present invention is used as a back-up if the conventional navigation apparatus fails.

It is also possible to provide information relating to the distances between geographical points at which guidance is given, determine distance by a distance sensor and then urge the driver to input the next geographical point (i.e., to make a trigger input) by a voice track or visual display.

Industrial Applicability

The navigation apparatus of the present invention

-31-

is mounted on an automotive vehicle so that even a driver unfamiliar with the roads can be guided to a desired destination automatically. For this reason, the apparatus of the invention is especially useful in a society where the aging are increasing in number.

WHAT IS CLAIMED IS:

1.   A vehicular navigation apparatus for outputting guidance information for travel to a destination, the apparatus having an input unit for inputting a point of departure and a destination, a memory unit for storing destination information and map information, a display unit for outputting said destination information and said map information in response to input information from said input unit, and memory means which, whenever said departure-point information is inputted, rewrites a non-volatile RAM and stores said information, characterized in that when the destination is reached, this destination information is set as departure-point information, and if a return to said departure point is selected, the departure-point information set in said non-volatile RAM is set as destination information.

2.   A vehicular navigation apparatus in which coordinates of a plurality of geographical points are set and guidance information for travel to a destination is outputted at each of the geographical points when the destination is inputted, the apparatus having an input unit for inputting a point of departure and a destination, a memory unit for storing destination information and map information, a display unit for outputting said destination information and said map information in response to input information from said input unit, and memory means which, whenever said departure-point information is inputted, rewrites

-33-

a non-volatile RAM and stores said information, characterized in that when the destination is reached, this destination information is set as departure-point information, and if a return to said departure point is selected, the departure-point information set in said non-volatile RAM is set as destination information.

3.    A vehicular navigation apparatus according to claim 1 or 2, characterized in that a non-volatile RAM area is provided with an area in which departure-point and destination data are written and preserved, and an area for preserving one or plurality items of geographical-point data writable only when there is a specific input.

4.    A vehicular navigation apparatus in which guidance information for travel to a destination is outputted at each intersection upon inputting a point of departure and the destination, said apparatus having an input unit for inputting a point of departure and a destination, a memory unit for storing road data, an intersection name list and a destination list, and a display unit, characterized in that, with regard to two intersections leading to a destination, a predetermined number of names of intersections within a predetermined distance are displayed on said display unit and are rendered selectable as points of departure.

5.    A vehicular navigation apparatus in which a plurality of geographical points are set and guidance information for travel to a destination is outputted at each of the geographical points when the destination is inputted, the apparatus having an input unit for inputting characters, a memory unit for storing guidance information and present-location information, and a display unit for outputting said guidance information as well as input information from the input unit, characterized in that said memory unit has an intersection list including character data indicative of region names and landmarks, and the apparatus has present-location input means in which present location is capable of being inputted by inputting characters from said input unit.

6.    A vehicular navigation apparatus according to claim 4 or 5, characterized in that the intersection list comprises a region name list and a landmark list, region names and landmarks are made data of a hierarchical structure, and the apparatus has means for retrieving a landmark after a region is selected, means for sorting region names and landmarks, and data indicating frequency of use of region names and landmarks.

7.    A vehicular navigation apparatus according to claim 6, characterized in that the region name list and landmark list are stored in an IC card or CDROM.

8.    A vehicular navigation apparatus according to claim 1, characterized by having having an input unit for inputting position by an infrared touch panel, and means for making a portion of said touch panel at which

-35-

inputs can be made appear visually distinguishable from other portions thereof.

# FIG. I

DEPARTURE-POINT INPUT 5

DESTINATION INPUT 6

PRESENT-LOCATION INPUT 7

TRIGGER INPUT 8

1 INPUT UNIT

C P U

9a ROM

9b RAM

2

DISPLAY UNIT (CRT, LIQUID CRYSTAL DISPLAY PANEL) 3

MEMORY UNIT 4

MAP DATA 10

INTERSECTION LIST 11

DESTINATION LIST 12

ROAD DATA 13

REGION NAME LIST 14

# FIG. 2

Destination

e  d

c  b

a

# FIG.3

```
                    ┌─────────────┐
                    │   START     │
                    └─────────────┘
                          │
    ①              ┌─────────────┐
                   │ INPUT       │
                   │ DESTINATION │
                   └─────────────┘
                          │
    ②              ┌─────────────┐
                   │PERFORM COURSE│
                   │ EXPLORATION │
                   └─────────────┘
                          │
    ③              ┌─────────────┐
                   │INPUT PRESENT│
                   │ POSITION    │
                   └─────────────┘
                          │
    ④              ┌─────────────┐
                   │OUTPUT FORWARD│
                   │ DIRECTION   │
                   └─────────────┘
                          │
    ⑤              ┌─────────────┐
                   │ INPUT START │
                   └─────────────┘
                          │
    ⑥              ┌──────────────────┐
                   │OUTPUT INFORMATION│
                   │ FOR TRAVEL TO    │
                   │ NEXT INTERSECTION│
                   └──────────────────┘
                          │
    ⑦              ╱╲
                  ╱ PRESENT- ╲
                 ╱ POSITION INPUT ╲
                ╱ OR CONFIRMATION  ╲
                ╲   TRIGGER ?      ╱
                 ╲               ╱
   PRESENT-POSITION  ╲        ╱
   INPUT DESIGNATION   ╲    ╱
                        CONFIRMATION
                          TRIGGER
```

# FIG. 4
## (a)

```
┌─────────────────┐
│ COURSE          │
│ EXPLORATION     │
│ MODE INPUT      │
└─────────────────┘
         │
(11)┌─────────────────┐
    │ SET             │
    │ DESTINATION     │
    │ IN WORK AREA    │
    └─────────────────┘
         │
(12)┌─────────────────┐
    │ SET FORWARD     │
    │ DIRECTION FROM  │
    │ INTERSECTIONS   │
    │ NEAR DESTINATION│
    └─────────────────┘
```

# FIG. 4
## (b)

# FIG.5 (a)

NODE NO.7
(INTERSECTION NO.2)

INTERSECTION NO.

NODE NO.5

ARC

NODE NO.2

NODE NO.1
(INTERSECTION NO. 1)

# FIG.5 (b)

INTERSECTION NO. n+1
( CONNECTING INTERSECTION NO.)

ARC

INTERSECTION NO. n

LANDMARK

ARC

INTERSECTION NO. n-1
(CONNECTING INTERSECTION NO.)

# FIG.6

NODE SERIES DATA

| NODE NO. | EAST LONGITUDE | NORTH · LATITUDE | ATTRIBUTE |
|----------|----------------|------------------|-----------|
| 0001 | 135··· | 35··· | 01 |
| 0002 | 135··· | 35··· | 00 |
| ⋮ | | | |

# FIG.7

INTERSECTION LIST

| CODE NO. | INTERSECTION NAME | INTERSECTION NO. | LANDMARK | ATTRIBUTE | CONNECTING INTERSECTION NO.① | CONNECTING INTERSECTION NO.② |
|----------|-------------------|------------------|----------|-----------|------------------------------|------------------------------|
| 0101 | GION | 10 | MARUYAMA PARK | 01 | 2147 | 2152 |
| 0102 | KITANO HAKUBAICHO | 398 | GASOLINE STATION | 00 | 59 | 3096 |
| | | | | | | |

# FIG.8

DESTINATION LIST

| CODE NO. | DESTINATION NAME | PARKING LOT NO. | CONNECTING INTERSECTION NO. ① | CONNECTING INTERSECTION NO. ② | PARKING LOT DIRECTION | PHOTO NO. ① | PHOTO NO. ② | EXIT PHOTO NO. | BLOCK | EAST LONGITUDE | NORTH LATITUDE |
|---|---|---|---|---|---|---|---|---|---|---|---|
| 0001 | ARASHIYAMA | 1 | 2103 | 2097 | −1 | 1121 | 0 | 0 | 0A00 | 135;… | 35;… |
| 0012 | KINKAKU TEMPLE | 1 | 2153 | 2265 | +1 | 2019 | 2020 | 2021 | 0CFF | 135;… | 35;… |
| | | | | | | | | | | | |

# FIG. 9 (a)

ROAD DATA

| ROAD NO. | STARTING POINT INTERSECTION NO. | END POINT INTERSECTION NO. | NO. OF NEXT ROAD HAVING SAME STARTING POINT | NO. OF NEXT ROAD HAVING SAME END POINT | ROAD WIDTH | PROHIBITION ① | PROHIBITION ② | GUIDANCE UNNECESSARY | PHOTOGRAPH NC. | NUMBER OF NODES | LEADING ADDRESS OF NODE SERIES DATA |
|---|---|---|---|---|---|---|---|---|---|---|---|
| 1 | 1 | 2 | 7 | 4 | 1 | — | — | 3 | 1 | 15 | 100 |
| 2 | 2 | 1 | 3 | 8 | 1 | — | — | 7 | 2 | 13 | 200 |
| 3 | 2 | 3 | 2 | 3 | 2 | — | — | 5 | 3 | 9 | 300 |
| 4 | 3 | 2 | 5 | 6 | 2 | — | — | 2 | 4 | 20 | 400 |
| 5 | 3 | 4 | 4 | 7 | 2 | 6 | — | 8 | 5 | 25 | 500 |
| 6 | 4 | 2 | 8 | 1 | 1 | 3 | 2 | — | 6 | 30 | 600 |
| 7 | 1 | 4 | 1 | 5 | 0 | — | — | — | 7 | 9 | 700 |
| 8 | 4 | 1 | 6 | 2 | 0 | — | — | 1 | 8 | 3 | 800 |

# FIG. 9 (b)

# FIG. 10

DESTINATION INPUT

(A)

DISPLAY DESTINATION GENRE SELECTION ITEMS [Fig.(a)] — 101

INPUT GENRE BY T.P. — 102

"RETURN" INPUTTED? — 103 — NO

YES

"CANCEL"

CONFIRM BY T.P. [Fig.(g)] — 104

"OK" — 105

COPY INITIAL DEPARTURE POINT DATA AREA IN DESTINATION DATA AREA

(G)

"CODE NO" INPUTTED? — 106 — NO

YES

(C)

READ PARKING LOT LIST OF ITEM FROM CD-ROM — 107

(B)

---

(B)

DISPLAY PARKING LOT LIST SELECTION ITEMS [Fig.(b)] — 108

IN CASE "PRECEDING PAGE" IS ENTERED AT FIRST PAGE

INPUT ITEM BY T.P. — 109

(A)

"CANCEL"

CONFIRM SELECTED ITEM [Fig.(c)] — 110

"OK"

PARKING LOT NAME OR "CODE NO. INPUT"? — 111 — PARKING LOT NAME — (F)

(C) — CODE NO. INPUT

DISPLAY DESTINATION CODE NO. INPUT SCREEN [Fig.(d)] — 112

(D)

(A) — PRECEDING PAGE

INPUT CODE NO. BY T.P. — 113

IS CODE NO. DESIGNATION INCORRECT? — 114 — NO — (E)

YES

DISPLAY MESSAGE "CODE NO. DESIGNATION IS INCORRECT" — 115

---

(E)

INTERSECTION CODE? — 116 — NO

YES — 117

DISPLAY "INTERSECTION CODE NO. CANNOT BE ENTERED" [Fig.(f)]

(D)

"CANCEL"
(D)

CONFIRM BY T.P. [Fig.(e)] — 118

"OK"

(F)

READ DATA CORRESPONDING TO PLACE NAME OR CODE NO. OUT OF CD-ROM AND SET IN DESTINATION DATA AREA — 119

(G)

RETURN

## FIG.11(a)

DESTINATION INPUT | SELECT DESTINATION

YOUR DESTINATION IS _____ .
IF INCORRECT, PRESS HELP BUTTON
AT LEFT AND CHANGE DEPARTURE POINT.

| SIGHTSEEING | LODGINGS |
| DINING | SOUVENIRS |
| CODE NO. INPUT | RETURN |

▨ RED COLOR

## FIG.11(b)

SELECTED GENRE

SIGHTSEEING | SELECT WHERE YOU WISH TO GO.

| ARASHIYAMA | IMPERIAL PALACE |
| KINKAKU TEMPLE | BOTANICAL GARDEN |
| GION | NANZEN TEMPLE |
| GINKAKU TEMPLE | CODE NO. INPUT |
| PRECEDING PAGE | NEXT PAGE |

## FIG.11(c)

SIGHTSEEING | OK ?

| ARASHIYAMA | IMPERIAL PALACE |
| KINKAKU TEMPLE | BOTANICAL GARDEN |
| GION | NANZEN TEMPLE |
| GINKAKU TEMPLE | CODE NO. INPUT |
| O.K | CANCEL |

# FIG.11(d)

```
┌─────────────────────────────────────────┐
│ ┌─────────────────┐ ┌─────────────────┐ │
│ │ DESTINATION     │ │                 │ │
│ │ CODE NO. INPUT  │ └─────────────────┘ │
│ └─────────────────┘                     │
│                    ┌────┬────┬────┐      │
│                    │ 1  │ 2  │ 3  │      │
│                    ├────┼────┼────┤      │
│                    │ 4  │ 5  │ 6  │      │
│                    ├────┼────┼────┤      │
│                    │ 7  │ 8  │ 9  │      │
│ ┌──────────┐       ├────┼────┼────┤      │
│ │PRECEDING │       │ OK │ 0  │CANCEL    │
│ │PAGE      │       └────┴────┴────┘      │
│ └──────────┘                            │
└─────────────────────────────────────────┘
```

# FIG.11(e)

```
┌─────────────────────────────────────────┐
│                      ┌───┬───┬───┬───┐   │
│                      │ 0 │ 1 │ 2 │ 3 │   │
│                      └───┴───┴───┴───┘   │
│ ┌─────────────────────────────────────┐ │
│ │ DESTINATION IS _____ .     │ │
│ └─────────────────────────────────────┘ │
│                    ┌────┬────┬────┐      │
│                    │ 1  │ 2  │ 3  │      │
│                    ├────┼────┼────┤      │
│                    │ 4  │ 5  │ 6  │      │
│                    ├────┼────┼────┤      │
│ ┌──────────┐       │ 7  │ 8  │ 9  │      │
│ │PRECEDING │       ├────┼────┼────┤      │
│ │PAGE      │       │ OK │ 0  │CANCEL    │
│ └──────────┘       └────┴────┴────┘      │
└─────────────────────────────────────────┘
```

# FIG.11(f)

```
┌─────────────────────────────────────────┐
│                      ┌───┬───┬───┬───┐   │
│                      │ 6 │ 0 │ 1 │ 2 │   │
│                      └───┴───┴───┴───┘   │
│ ┌─────────────────────────────────────┐ │
│ │ INTERSECTION CODE NO.               │ │
│ │ CANNOT BE ENTERED                   │ │
│ └─────────────────────────────────────┘ │
│                    ┌────┬────┬────┐      │
│                    │ 1  │ 2  │ 3  │      │
│                    ├────┼────┼────┤      │
│                    │ 4  │ 5  │ 6  │      │
│                    ├────┼────┼────┤      │
│ ┌──────────┐       │ 7  │ 8  │ 9  │      │
│ │PREVIOUS  │       ├────┼────┼────┤      │
│ │PAGE      │       │ OK │ 0  │CANCEL    │
│ └──────────┘       └────┴────┴────┘      │
└─────────────────────────────────────────┘
```

# FIG.11(g)

```
┌─────────────────────────────────────────┐
│                                          │
│                                          │
│      DO YOU WISH TO RETURN ?             │
│                                          │
│                                          │
│   ┌──────────┐         ┌──────────┐      │
│   │   YES    │         │   NO     │      │
│   └──────────┘         └──────────┘      │
│                                          │
└─────────────────────────────────────────┘
```

# FIG.12

```
        ┌─────────────┐
        │ PRESS RESET │
        │   SWITCH    │
        └─────────────┘
              │
              ▼
        ┌─────────────┐
        │INPUT INITIAL│──── 131
        │DEPARTURE POINT│
        └─────────────┘
              │
              ▼
    ┌───────────────────┐
    │ WRITE AS INITIAL  │
    │ DEPARTURE-POINT DATA│
    │ IN NON-VOLATILE AREA│──── 132
    │ IN REGION THEREOF │
    │ REWRITABLE ONLY WHEN│
    │ RESET SWITCH IS PRESSED│
    └───────────────────┘
              │
              ▼
    ┌───────────────────┐
    │ COPY INITIAL      │
    │ DEPARTURE-POINT DATA AS│──── 133
    │ DEPARTURE-POINT DATA│
    └───────────────────┘
              │
              ▼
        ┌─────────────┐
        │   INPUT     │──── 134
        │ DESTINATION │
        └─────────────┘
              │
              ▼
        ┌─────────────┐
        │PRRFORM COURSE│──── 135
        │  GUIDANCE   │
        └─────────────┘
              │
              ▼
        ┌─────────────┐
        │  EXECUTE    │
        │ CESTINATION │──── 136
        │  ARRIVAL    │
        │ PROCESSING  │
        └─────────────┘
              │
              ▼
        ┌─────────────┐
        │SET DESTINATION│
        │ DATA AS     │──── 137
        │ DEPARTURE-POINT│
        │ DATA        │
        └─────────────┘
```

# FIG.13

```
      ┌─────────────────┐
      │ INPUT INITIAL   │────── 151
      │ DEPARTURE POINT │
      └─────────────────┘
              │
              ▼
      ┌─────────────────┐
      │ DISPLAY DEPARTURE-│
      │ POINT SELECTION │────── 152
      │ SCREEN (Fig. 9) │
      └─────────────────┘
              │
              ▼
      ┌─────────────────┐
      │ SELECT PLACE OF │
      │ BUSINESS BY     │────── 153
      │ TOUCH-PANEL INPUT│
      └─────────────────┘
              │
              ▼
      ┌─────────────────┐
      │ DISPLAY SELECTION│
      │ CONFIRMATION    │────── 154
      │ SCREEN (Fig. 10)│
      └─────────────────┘
              │
              ▼
   "CANCEL"    ◇ "OK" OR        ────── 155
   ◄──────────  "CANCEL"?
              │
             "OK"
              ▼
      ┌─────────────────┐
      │ DISPLAY CODE NO.│────── 156
      │ INPUT SCREEN    │
      └─────────────────┘
              │
              ▼
      ┌─────────────────┐
      │ INPUT CODE NO.  │────── 157
      │ BY T.P.         │
      └─────────────────┘
              │
              ▼
      ┌─────────────────┐
      │ DISPLAY INPUTTED│
      │ PLACE NAME      │────── 158
      │ CONFIRMATION SCREEN│
      └─────────────────┘
              │
              ▼
         ◇ OK OR      "CANCEL"  ────── 159
           CANCEL ?  ──────────►
              │
             "OK"
              ▼
      ┌─────────────────┐
      │    RETURN       │
      └─────────────────┘
```

# FIG. 14 (a)

| DEPARTURE-POINT SETTING | SELECT DEPARTURE PLACE NAME |
|---|---|
| PLACE OF BUSINESS AT STATION | — — — — — — |
| CODE NO. INPUT | |
| | |
| | |

# FIG. 14 (b)

| DEPARTURE-POINT SETTING | OK ? |
|---|---|
| PLACE OF BUSINESS AT STATION | — — — — — — |
| CODE NO. INPUT | |
| | |
| | |
| OK | CANCEL |

# FIG.15

RAM

ROM PROGRAM

SAVE

BACK-UP RAM

{ DEPARTURE-POINT DATA
DESTINATION DATA

REWRITABLE AREA ONLY
WHEN RESET SW IS
PRESSED

INITIAL DEPARTURE-
POINT DATA

0 348 528

# FIG.16

## FIG.17

| INTERSECTION NO. | EAST LONGITUDE (137°) | NORTH LATITUDE (35°) | SMALLEST ROAD NO.OF EXITING ROADS | INTERSECTION NO.OF BLOCK ALONGSIDE | NUMBER OF EXITING ROADS | INTERSECTION NAME |
|---|---|---|---|---|---|---|
| 1 | 5'43" | 3'01" | 1 | — | 3 | — |
| 2 | 5'42" | 3'06" | 4 | — | 4 | MINAMI-ANJO STN. |
| 3 | 5'51" | 3'09" | 8 | — | 3 | MINAMI-ANJO STN.HIGASHI |
| 4 | 5'34" | 2'52" | 11 | — | 4 | ASAHI-CHO |
| 5 | 5'27" | 3'02" | 15 | — | 4 | A101-CHO |
| 6 | 5'41" | 3'16" | 19 | — | 4 | MINAMI-MACHI |
| 7 | 5'53" | 3'12" | 23 | — | 4 | GOKURAKUBO HIGASHI |
| 8 | 5'25" | 2'43" | 27 | — | 4 | ASAHI-CHO NISHI |
| 9 | 5'33" | 2'53" | 31 | — | 1 | — |
| 10 | 5'35" | 2'51" | 32 | — | 1 | — |
| 11 | 5'27" | 3'03" | 33 | — | 1 | — |
| 12 | 5'28" | 3'00" | 34 | — | 1 | — |
| 13 | 5'11" | 2'54" | 35 | — | 4 | SUEHIRO-CHO |

## FIG.18

| ROAD NO. | END-POINT INTERSECTION NO. | NO.OF NEXT ROAD HAVING SAME STARTING POINT |
|---|---|---|
| 1 | 3 | 2 |
| 2 | 4 | 3 |
| 3 | 2 | 1 |
| 4 | 5 | 5 |
| 5 | 3 | 6 |
| 6 | 6 | 7 |
| 7 | 1 | 5 |
| 8 | 2 | 9 |
| 9 | 7 | 10 |
| 10 | 1 | 8 |
| 11 | 1 | 12 |
| 12 | 8 | 13 |
| 13 | 9 | 14 |
| 14 | 10 | 11 |
| 15 | 11 | 16 |
| 16 | 12 | 17 |
| 17 | 2 | 18 |

# FIG.19

```
        ┌─────────────────┐
        │  INPUT GUIDANCE  │
        │  STARTING POINT  │
        └─────────────────┘
                 │
          YES    ◇ RESET INITIAL      101
        ┌────────   START ?   ────
        │        ◇
        │        │ NO
        │   ┌──────────────────┐
        │   │ CONFIRM DEPARTURE │
        │   │ FROM PRECEDING    │    102
        │   │ GUIDANCE POINT    │
        │   └──────────────────┘
        │            │
  104   │     "NO"   ◇              103
        │  ┌──────── "YES" OR "NO" ────
        │  │         ◇
┌───────────────┐   │ "YES"
│ INPUT GUIDANCE │  │
│ STARTING POINT │  │
│ FROM TOUCH PANEL│ │
└───────────────┘  │
        │          │
        └──────────┤
                   │
        ┌────────────────────────┐
        │ PERIPHERAL INTERSECTION │   105
        │ LIST DISPLAY SUBROUTINE │
        └────────────────────────┘
                   │
        ┌────────────────┐
        │ MARK INPUT FROM │       106
        │ TOUCH PANEL     │
        └────────────────┘
                   │
          NO       ◇ SELECT "OTHER        107
        ┌────────  INTERSECTION" ? ────
        │          ◇
        │          │ YES
        │   ┌──────────────┐
        │   │ INPUT CODE NO.│      108
        │   └──────────────┘
        │          │
        └──────────┤
                   │
            ┌───────────┐
            │   E N D   │
            └───────────┘
```

# FIG.20

```
      ┌──────────────────┐
      │   PERIPHERAL     │
      │ INTERSECTION LIST│
      │ DISPLAY SUBROUTINE│
      └──────────────────┘
```

111 — PERIPHERAL INTERSECTION RETRIEVAL SUBROUTINE

112 — CHECK WHETHER EACH INTERSECTION HAS ALREADY BE EXTRACTED

113 — EXECUTE FLLOWING PROCESSING WITH REGARD TO INTERSECTIONS NOT ALREADY EXTRACTED

114 — DISTANCE FROM DEPARTURE POINT WITH IN 1km ? — NO

YES

115 — MAKE THIS INTERSECTION CHECKED NEXT

116 — IS THERE INTERSECTION NAME ? — NO

YES

117 — MAKE THIS DISPLAY INTERSECTION

118 — NUMBER OF DISPLAY INTERSECTION = 6 ? — YES

NO

119 — IS THERE STILL INTERSECTION TO BE CHECKED ?

RETURN

# FIG. 2 I

```
┌──────────────────────────┐
│  PERIPHERAL INTERSECTION  │
│   RETRIEVAL SUBROUTINE    │
└──────────────────────────┘
             │
             ▼
┌──────────────────────────────────────┐
│ EXTRACT, FROM INTERSECTION DATA,      │
│ SMALLEST ROAD NO. OF EXITING ROADS,   │──── 121
│ NUMBER OF EXITING ROADS AND           │
│ INTERSECTION NO. OF NEIGHBORING BLOCK │
└──────────────────────────────────────┘
             │
             ▼
┌──────────────────────────────────────┐
│ EXTRACT, FROM ROAD DATA, END-POINT    │
│ INTERSECTION NO. AND NEXT ROAD NO.    │──── 122
│ HAVING SAME STARTING POINT            │
└──────────────────────────────────────┘
             │
             ▼
        FIRST RETRIEVED ROAD =        ──── 123
NO ◄──  ROAD EXTRACTED NOW ?
             │ YES
             ▼
        IS THERE INTERSECTION         ──── 124
NO ◄──  OF NEIGHBORING BLOCK
             │ YES
             ▼
        END OF INTERSECTION           ──── 125
        RETRIEVAL OF          ──► NO
        NEIGHBORING BLOCK
             │ YES
             ▼
      ┌──────────┐
      │  RETURN  │
      └──────────┘
```

# FIG.22

GUIDANCE STARTING-POINT INPUT

YOU WERE GUIDED TO

MEITETSU MINAMI ANJO STATION

LAST TIME.

IS GUIDANCE STARTING POINT
IN THE SURROUNDING AREA ?

| YES | NO |
|-----|-----|

# FIG.23

GUIDANCE STARTING-POINT INPUT

SELECT TIME FROM MENU AT NEARBY
INTERSECTION OR IN FRONT OF
LAST GUIDANCE POINT

| MINAMI ANJO STN. | MINAMI-ANJO STN.HIGASHI |
|---|---|
| ASAHI-CHO | AIOI-CHO |
| MINAMI-MACHI | GOKURAKUBO HIGASHI |
| OTHER INTERSECTION | IN FRONT OF LAST GUIDANCE POINT |

# FIG.24

# FIG.25(a)  FIG.25(b)

REGION NAME LIST       LANDMARK LIST

| | REGION NAME LIST | | | LANDMARK LIST | |
|---|---|---|---|---|---|
| REGION NO. | K Y O T O | ← REGION NAME (KANJI) → | NANZENJI | ADDRESS ØØF64Ø | PLACE NAME NO. |
| | K Y O T O | REGION NAME (HIRAGANA) → | NANZENJI | | |
| 0 | K y o t o | REGION NAME (ROMAN CHARACTERS) → | nanzenji | | Ø |
| | Ø 3 | ← CODE NO. → | ØØ8I | | |
| | ØØF64Ø | ← REGION NAME LIST STORAGE ADDRESS | I4Ø° | ← EAST LONGITUDE | |
| | 565 | ← NUMBER OF REGION NAME LIST DATA ITEMS | 36° | ← NORTH LATITUDE | |
| | 5 | ← INITIAL FREQUENCY → | 3 | | |
| I | NARA | | ATTRIBUTE | ← BY GENRE | |

# FIG.25(c)  FIG.25(d)

REGION FREQUENCY LIST

| REGION NO. | FREQUENCY |
|---|---|
| 3 | I0 |
| O | 5 |
| ⋮ | ⋮ |

LANDMARK FREQUENCY LIST

| LANDMARK NO. | FREQUENCY |
|---|---|
| I2 | I3 |
| 8 | 5 |
| O | 3 |
| ⋮ | ⋮ |

# FIG.26(a)  FIG.26(b)

ROMAN CHARACTER SORT FILE

| LANDMARK (ROMAN CHARACTERS) | DATA STORAGE ADDRESS |
|---|---|
| ARASIYAMA | ØF84Ø |
| ANRAKUJI | ØF73Ø |
| ⋮ | ⋮ |

HIRAGANA SORT FILE

| LANDMARK (HIRAGANA CHARACTERS) | DATA STORAGE ADDRESS |
|---|---|
| ARASIYAMA | ØF84Ø |
| ANRAKUJI | ØF73Ø |
| ⋮ | ⋮ |

# FIG.26(c)

INTERSECTION FILE

| CODE NO. | INTERSECTION NAME | SIGNAL PRESENT? | CODE NO. OF INTERSECTION TRAVELLED NEXT |
|---|---|---|---|
| ØØ1 | KANDA | YES | ØØ2 |
| ØØ2 | YUSHIMA | YES | ØØ4 |
| ⋮ | ⋮ | ⋮ | ⋮ |

# FIG. 27(a)

```
┌──────────────────┐
│   SELECT         │
│   REGION NAME    │
└──────────────────┘
          │
          ▼
┌──────────────────┐
│ SELECT LENDMARK  │
│ LIST OF SELECTED │
│ REGION           │
└──────────────────┘
          │
          ▼
┌──────────────────┐
│    SELECT        │
│    LANDMARK      │
└──────────────────┘
          │
          ▼
┌──────────────────┐
│  SET             │
│  SELECTED DATA   │
└──────────────────┘
```

# FIG. 27(b)

```
┌──────────────────┐
│   SELECT GENRE   │
└──────────────────┘
          │
          ▼
┌──────────────────┐
│   SELECT, FROM   │
│  LIST, LANDMARK  │
│  CORRESPONDING   │
│  TO DESIGNATED   │
│  GENRE           │
└──────────────────┘
          │
          ▼
┌──────────────────┐
│    SELECT        │
│    LANDMARK      │
└──────────────────┘
          │
          ▼
┌──────────────────┐
│  SET             │
│  SELECTED DATA   │
└──────────────────┘
```

# FIG. 28 (a)

# FIG. 28 (b)

# FIG.29 (a)

|   |   |   |
|---|---|---|
| 1 | 2 | 3 |
| 4 | 5 | 6 |
| 7 | 8 | 9 |
| OK | 0 | CANCEL |

I 0 5 8

ROMAN CHARACTER INPUT

CODE NO. INPUT

# FIG.29 (b)

K Y

KYOTO GOSHO          KIYOMIZU TEMPLE

KINKAKU TEMPLE

PRECEDING PAGE          NEXT PAGE

# FIG.30

```
        KEYBOARD
        INPUT
           │
           ▼                    21
      ┌──────────┐
      │ DISPLAY  │
      │INPUT SCREEN│
      └──────────┘
           │                22
           ▼
         ROMAN          NO
        CHARACTER  ─────────┐
         INPUT?            │
           │ YES    23     │
           ▼               │
      ┌──────────┐         │
      │CLEAR INPUT│        │
      │CHARACTER BUFFER│ 24│
      └──────────┘         │
           │               │
           ▼               │
      ┌──────────┐         │
      │INPUT ONE │         │
      │ROMAN CHARACTER│ 25 │
      └──────────┘         │
           │               │
           ▼               │
      ┌──────────┐         │
      │STORE IN INPUT│     │
      │CHARACTER BUFFER│ 26│
      └──────────┘         │
           │               │
           ▼               │
      ┌──────────┐         │
      │SELECT NAME│        │
      │CORRESPONDING│      │
      │TO INPUTTED│        │
      │CHARACTER FROM│     │
      │ROMAN CHARACTER│    │
      │SORT LIST,│         │
      │AND DISPLAY│        │
      │MENU SCREEN│        │
      └──────────┘         │
           │          27   │
           ▼               │
   NO    SELECT            │
  ◄──── ITEM IN            │
        MENU?              │
           │ YES           │
           ▼               │
      ┌──────────┐         │
      │READ IN SELECTED│ 28│
      │NAME DATA AND SET│  │
      │IN PREDETERMINED│   │
      │AREA OF MEMORY│     │
      └──────────┘         │
           ┊               │
           ▼               │
        RETURN             │
```

HIRAGANA INPUT? 29 NO → INPUT CODE NO. 35

CLEAR INPUT CHARACTER BUFFER 30

INPUT ONE HIRAGANA CHARACTER 31

STORE IN INPUT CHARACTER BUFFER 32

SELECT NAME CORRESPONDING TO INPUTTED CHARACTER FROM HIRAGANA SORT LIST, AND DISPLAY MENU SCREEN 33

IS THERE NAME CORRESPONDING TO CODE NO? 36   NO

SELECT ITEM IN MENU? 34   YES

# FIG.31

```
        ┌─────────────┐
        │   TOUCH     │
        │ PANEL INPUT │
        └──────┬──────┘
               │
        ┌──────▼──────┐  21
        │  DISPLAY    │
        │ INPUT SCREEN│
        └──────┬──────┘
```

- 21 DISPLAY INPUT SCREEN
- 22 ROMAN CHARACTER INPUT?
- 29 HIRAGANA INPUT?
- 35 INPUT CODE NO.
- 23 CLEAR INPUT CHARACTER BUFFER
- 30 CLEAR INPUT CHARACTER BUFFER
- 36 IS THERE NAME CORRESPONDING TO CODE NO.?
- 24 INPUT ONE ROMAN CHARACTER
- 31 INPUT ONE HIRAGANA CHARACTER
- 25 STORE IN INPUT CHARACTER BUFFER
- 32 STORE IN INPUT CHARACTER BUFFER
- 26 SELECT NAME CORRESPONDING TO INPUTTED CHARACTER FROM ROMAN CHARACTER SORT LIST
- 33 SELECT NAME CORRESPONDING TO INPUTTED CHARACTER FROM HIRAGANA SORT LIST
- 37 IS NUMBER OF NAMES LESS THAN PREDETERMINED NUMBER?
- 38 IS NUMBER OF NAMES LESS THAN PREDETERMINED NUMBER?
- 27 SELECT ITEM IN MENU?
- 34 SELECT ITEM IN MENU?
- 28 READ IN SELECTED NAME DATA AND SET IN PREDETERMINED AREA OF MEMORY
- RETURN

# FIG.32

Vxo  Vx1  Vx2  Vxn (Vxi, Vyi OUTPUT)

LIGHT-RECEIVING ELEMENT

DISPLAY SCREEN

LIGHT-EMITTING ELEMENT

# INTERNATIONAL SEARCH REPORT

**0 348 528**

International Application No  PCT/JP88/01298

## I. CLASSIFICATION OF SUBJECT MATTER (if several classification symbols apply, indicate all) 6

According to International Patent Classification (IPC) or to both National Classification and IPC

$$Int.Cl^4 \quad G01C21/00, \ G08G1/09$$

## II. FIELDS SEARCHED

### Minimum Documentation Searched 7

| Classification System | Classification Symbols |
|---|---|
| IPC | G01C21/00, 21/20 |

### Documentation Searched other than Minimum Documentation to the Extent that such Documents are Included in the Fields Searched 8

| | |
|---|---|
| Jitsuyo Shinan Koho | 1975 – 1987 |
| Kokai Jitsuyo Shinan Koho | 1975 – 1987 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | JP, A, 61-217899 (Nissan Motor Co., Ltd.) 27 September 1986 (27. 09. 86) Page 1, lower part, right column, line 20 to page 5, upper part, left column, line 19 (Family: none) | 1-3 |
| Y | JP, A, 62-82316 (Nissan Motor Co., Ltd.) 15 April 1987 (15. 04. 87) Page 1, lower part, right column, line 13 to page 7, lower part, right column, line 12 (Family: none) | 4 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure. use. exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| March 24, 1989 (24. 03. 89) | April 10, 1989 (10. 04. 89) |

| International Searching Authority | Signature of Authorized Officer |
|---|---|
| Japanese Patent Office | |